# EUROPEAN PATENT APPLICATION

(11) **EP 4 744 989 A1**
(43) Date of publication of application: **20.05.2026**
(21) Application number: 25215289.7
(22) Date of filing: 12.11.2025
(51) Int. Cl.: B60W 30/00, F16D 48/02, F16H 3/66, F16H 3/64

(54) **POWER SYSTEM COUPLING OF A MULTI-SPEED TRANSMISSION TO A PRIME MOVER**

(30) Priority: 15.11.2024 US 202418949326
(71) Applicant: Allison Transmission, Inc., Indianapolis, IN 46222-3271 (US)
(72) Inventor: RIETDORF, Michael, Brownsburg, Indiana, 46112 (US); MOCK, Isaac, Martinsville, Indiana, 46151 (US); ZHANG, Shuo, Whitestown, Indiana, 46075 (US)
(74) Representative: Haseltine Lake Kempner LLP

(57) **Abstract**

A multi-speed transmission including a plurality of planetary gearsets and a plurality of selective couplers is coupled to a prime mover through an input coupler. The input coupler may be a mechanical clutch useful modulate a power extraction from the prime mover, where in some forms the prime mover is a constant speed engine. The input coupler is configured to receive hydraulic fluid from the multi-speed transmission to aid in modulating power extraction from the prime mover. The hydraulic fluid is used to move an apply piston of the input coupler, where the apply piston is coupled to and applies pressure to a disk pack of the mechanical clutch. Varying pressure applied from the apply piston to the disk pack aids in modulating power extraction from the constant speed engine. The input coupler may include a balance cavity to aid in offsetting rotation induced pressure rise in a hydraulic fluid.

## Description

### FIELD OF THE DISCLOSURE

The present disclosure relates to providing power to a multi-speed transmission that includes a plurality of planetary gearsets and a plurality of selective couplers and in particular to providing power to a multi-speed transmission from a prime mover.

### BACKGROUND OF THE DISCLOSURE

Multi-speed transmissions use a plurality of planetary gearsets, selective couplers, interconnectors, and additional elements to achieve a plurality of forward and reverse speed ratios. Exemplary multi-speed transmissions are disclosed in US Patent No. 9,625,007, serial no. 14/457,592, titled MULTI-SPEED TRANSMISSION, filed August 12, 2014, the entire disclosure of which is expressly incorporated by reference herein. Coupling multi-speed transmissions with a variety of engine types, including constant speed engines, remains an area of interest.

### SUMMARY

The present disclosure provides systems and methods for coupling a multi-speed transmission to a prime mover. The systems and methods may provide for power extraction from the prime mover through control of an input clutch operatively coupling the multi-speed transmission to a prime mover.

In some instances throughout this disclosure and in the claims, numeric terminology, such as first, second, third, and fourth, is used in reference to various components, speed ratios, and other items. Such use is not intended to denote an ordering of the components. Rather, numeric terminology is used to assist the reader in identifying the component being referenced and should not be narrowly interpreted as providing a specific order of components.

In an exemplary embodiment of the present disclosure, a power system for converting a prime mover input to a multi-speed transmission output is provided. The prime mover may be configured to produce an engine output power within an operating performance speed range of the prime mover in response to a variable power extraction. The power system comprising: a multi-speed transmission adapted to be operatively coupled to the prime mover and configured to receive the engine output power from the prime mover and convert the engine output power to a transmission output torque and a transmission output speed, the multi-speed transmission including a plurality of speed ratios that relate an input speed to the transmission output speed of the multi-speed transmission; and a mechanical input clutch adapted to be in power flow communication between the prime mover and the multi-speed transmission, the mechanical input clutch during operation providing the variable power extraction from the prime mover to the multi-speed transmission, the mechanical input clutch operatively configured to modulate the variable power extraction from the prime mover to the multi-speed transmission so that an operating speed of the prime mover satisfies a first condition.

In one example thereof, the mechanical input clutch includes a working fluid path structured to deliver a hydraulic fluid to an apply piston, the working fluid path configured to rotate about an axis to produce a rotation induced pressure in the hydraulic fluid.

In another example thereof, a total pressure of the hydraulic fluid is modulated based on a shift event of the multi-speed transmission.

In a further example thereof, the power system further comprises a transmission control circuit configured to operate the mechanical input clutch based on a speed of the prime mover so as to modulate the variable power extraction from the prime mover.

In a still further example thereof, the transmission control circuit is configured to feather the mechanical input clutch during a shift event by varying a pressure applied to a disk pack of the mechanical input clutch.

In yet a still further example thereof, wherein the transmission control circuit is further configured to operate the mechanical input clutch based on a change in transmission configuration of the multi-speed transmission.

In an exemplary embodiment of the present disclosure, a power system for converting a constant speed engine input to a multi-speed transmission output is provided. The constant speed engine may be configured to produce an engine output power within an operating performance speed range of the constant speed engine in response to a variable power extraction. The power system comprising a multi-speed transmission adapted to be operatively coupled to the constant speed engine and configured to receive the engine output power from the constant speed engine and convert the engine output power to a transmission output torque and a transmission output speed, the multi-speed transmission including a plurality of speed ratios that relate an input speed to the transmission output speed of the multi-speed transmission; and a mechanical input clutch adapted to be in power flow communication between the constant speed engine and the multi-speed transmission, the mechanical input clutch during operation providing the a variable power extraction from the constant speed engine to the multi-speed transmission, the mechanical input clutch operatively configured to modulate the variable power extraction from the constant speed engine to the multi-speed transmission so that an operating speed of the constant speed engine satisfies a first condition.

In one example thereof, the mechanical input clutch includes a working fluid path structured to deliver a hydraulic fluid to an apply piston, the working fluid path configured to rotate about an axis to produce a rotation induced pressure in the hydraulic fluid.

In another example thereof, a total pressure of the hydraulic fluid is modulated based on a shift event of the multi-speed transmission.

In a further example thereof, the power system further comprises a transmission control circuit configured to operate the mechanical input clutch based on a speed of the constant speed engine so as to modulate the variable power extraction from the constant speed engine.

In a still further example thereof, the transmission control circuit is configured to feather the mechanical input clutch during a shift event by varying a pressure applied to a disk pack of the mechanical input clutch.

In yet a still further example thereof, the transmission control circuit is further configured to operate the mechanical input clutch based on a change in transmission configuration of the multi-speed transmission.

In another exemplary embodiment, a clutch assembly for modulating a power extraction from a constant speed engine during a coupling event in which the constant speed engine is coupled to and in power communication with a multi-speed transmission is provided. The constant speed engine may be configured to produce an operating speed within an operating performance speed range by varying fuel flow in response to the power extraction, the multi-speed transmission having a plurality of planetary gear sets configured to produce a plurality of speed ratios when in power communication with the constant speed engine. The clutch assembly comprising: an outer housing; a clutch input configured to be in rotationally driven communication with a prime mover, the clutch input supported by the outer housing; a clutch output configured to be in rotationally driving communication with a multi-speed transmission, the clutch output supported by the outer housing; a disk pack configured to selectively couple the clutch input to the clutch output, the disk pack including at least one first friction surface capable of being selectively engaged with at least one second friction surface, the disk pack having an engaged condition to couple the clutch input to the clutch output characterized in that the at least one first friction surface is in contact with the at least one second friction surface and a disengaged condition to uncouple the clutch input to the clutch output in which the at least one first friction surface is not in contact with the at least one second friction surface; an apply piston configured to urge the at least one first friction surface into contact with the at least one second friction surface in the engaged condition when a hydraulic apply pressure is generated in an input hydraulic line, wherein a total pressure at a piston head of the apply piston is a sum of the hydraulic apply pressure and a rotational hydraulic pressure as a result of rotational motion of the apply piston about a rotational axis; a balance cavity having a balance cavity bleed configured to feed a hydraulic fluid to the balance cavity, the balance cavity structured to generate a balance cavity hydraulic pressure as a result of rotational motion of the balance cavity about the rotational axis, the balance cavity hydraulic pressure offsetting the rotational hydraulic pressure of the apply piston; and a working fluid path configured to flow a hydraulic fluid radially outward from the rotational axis through an interior of the outer housing, the working fluid path configured to flow radially inward through the disk pack and to the balance cavity bleed.

In one example thereof, the balance cavity is defined by a balance flange forming a dam configured to retain a volume of hydraulic fluid in the balance cavity.

In another example thereof, wherein the balance cavity extends around an end of the dam, the volume of hydraulic fluid occupying the balance cavity up to the end of the dam on a first side of the balance flange during operation of the clutch assembly, and a flow of hydraulic fluid over the end of the dam to a second side of the balance flange opposite the first side during operation of the clutch assembly.

In a further example thereof, the clutch assembly further comprises an energy storage device positioned on the first side of the balance flange and configured to produce an opposing force to the apply piston when the apply piston apply urges the at least one first friction surface into contact with the at least one second friction surface in the engaged condition.

In a still further example thereof, the clutch assembly further comprises a clutch housing configured to rotate about the rotational axis, wherein the apply piston is configured to rotate about the rotational axis, and wherein the apply piston is configured to translate relative to the clutch housing.

In yet still another example thereof, the apply piston includes a pressure member positioned in a cavity of the clutch housing, and wherein the balance flange extends radially inward from the pressure member.

In a further example thereof, the disk pack includes a plurality of the first friction surfaces coupled to rotate with the clutch input and a plurality of the second friction surfaces coupled to rotate with the clutch output, wherein the apply piston is slidingly coupled to a clutch housing via a react pin and is urged to force the first plurality of friction surfaces into contact with the second plurality of friction surfaces when it translates relative to the clutch housing.

In yet another exemplary embodiment, a power transfer system useful to transfer power between a prime mover and a power consuming device is provided. The power transfer system comprising: a multi-speed transmission having a plurality of selective couplers operable to selectively change from an engaged condition to a disengaged condition, the multi-speed transmission including a transmission input configured to receive mechanical power; a pump configured to provide pressure and motive force to a hydraulic fluid consumed in the multi-speed transmission; an input coupler having a mechanical input clutch in power communication with the multi-speed transmission and in fluid communication with the pump, the input coupler having a mechanical clutch, the input coupler including a clutch input configured to receive mechanical power and a clutch output configured to be coupled to the transmission input of the multi-speed transmission and transfer power from the clutch input to the transmission input of the multi-speed transmission; a first working fluid path is defined to convey the hydraulic fluid from the multi-speed transmission to the input coupler, the first working fluid path routed through a first port defined between the multi-speed transmission and the input coupler; and a second working fluid path is defined to convey the hydraulic fluid from the input coupler to the multi-speed transmission, the second working fluid path routed through a second port defined between the multi-speed transmission and the input coupler.

In an example thereof, the input coupler defines a first interface section, wherein the multi-speed transmission defines a second interface section, and wherein the first interface section and second interface section together define the first port and the second port.

In another example thereof, the first interface section is used to enclose an open interior of the input coupler, and wherein the second interface section is used to enclose an open interior of the multi-speed transmission.

In a further example thereof, the first working fluid path extends into the input coupler and includes a clutch pack fluid branch configured to route the hydraulic fluid radially outward to a disk pack of the input coupler, the clutch pack fluid branch configured to flow the hydraulic fluid radially inward through the disk pack.

In yet another example thereof, the first working fluid path also includes a balance branch, the balance branch located downstream of the clutch pack fluid branch, a balance cavity bleed configured to provide working fluid from the clutch pack fluid branch to the balance branch.

In still yet another example thereof, the first working fluid path also includes a clutch apply fluid branch configured to provide the hydraulic fluid to an apply piston of the mechanical input clutch, the clutch apply fluid branch including a first portion located radially inward of the balance branch, and a second portion extending radially outward from the first portion to the apply piston.

A clutch balance assembly for an input clutch to provide an offset hydraulic pressure as a result of rotation of the clutch balance assembly is provided. The clutch balance assembly comprising: a clutch input configured to receive rotational power from a prime mover; a clutch output configured to deliver rotational power to a multi-speed transmission; a disc pack configured to selectively couple the clutch input to the clutch output; an apply piston having a piston head on a first axial side of the apply piston, the apply piston configured to receive a hydraulic fluid in contact with the piston head, the piston head extending a radial distance offset from a rotational axis of the apply piston, a pressure at the piston head in part driven by rotational motion of the apply piston about the rotational axis, the rotational motion forming a rotation induced pressure, the rotation induced pressure a component of the pressure at the piston head; a balance flange connected to the apply piston and configured to move with the apply piston, the balance flange extending radially inward relative to the piston head and having a first axial side and a second axial side, the first axial side of the balance flange opposite the second axial side of the balance flange; and a balance cavity defined by the balance flange, the balance cavity extending on the first axial side of the balance flange and the second axial side of the balance flange.

In an example thereof, the balance flange having an end located radially inward from the piston head, the end permitting the hydraulic fluid to spill over from the first axial side to the second axial side during operation of the clutch balance assembly.

In another example thereof, a surface area of the piston head is smaller than a surface area of the first axial side of the balance flange.

In yet another example thereof, when first axial side of the balance cavity includes the hydraulic fluid, a rotation induced pressure on first axial side of the balance flange balances the rotation induced pressure at the piston head.

In still yet another example thereof, the clutch balance assembly further comprises a balance cavity bleed configured to provide the hydraulic fluid to the balance cavity located on the first axial side of the balance flange.

In yet still another example thereof, the clutch balance assembly further comprises an energy storage member disposed in the balance cavity, the energy storage member configured to oppose axial motion of the apply piston when the hydraulic fluid in contact with the piston head is pressurized.

In yet another example thereof, the energy storage member is located radially outward from an end of the balance flange defined between the first axial side and the second axial side, the energy storage member is submerged in the hydraulic fluid on the first axial side of the balance flange.

In still yet a further example thereof, the clutch balance assembly further comprises a clutch housing slidingly coupled with the apply piston, the balance cavity defined between the clutch housing and the balance flange on the first axial side of the balance flange and the second axial side of the balance flange.

In yet still another example thereof, an axial width of the balance cavity on the first axial side changes from a first width to a second width as the apply piston moves from a first position to a second position.

In yet a further exemplary embodiment of the present disclosure, a method of operating a power system is provided. The power system may have a constant speed engine coupled to a multi-speed transmission through an input clutch. The method comprising: fueling the constant speed engine at a first steady state fuel flow to maintain a speed of the constant speed engine within an operating performance speed range and provide a first power output, the first power output providing a power extraction from the constant speed engine to the multi-speed transmission; changing a gear ratio of the multi-speed transmission and thereby vary the power extraction from the constant speed engine to the multi-speed transmission; modulating the power extraction from the constant speed engine to the multi-speed transmission through a pressure applied between a first friction surface of the input clutch and a second friction surface of the input clutch; and during the modulating, altering fueling of the constant speed engine to maintain an operating speed of the constant speed engine in an operating performance speed range.

In an example thereof, the method further comprises sensing a speed of the constant speed engine to form a sensed speed, wherein the modulating is based on the sensed speed.

In another example thereof, the modulating includes varying a pressure to a disk pack of a mechanical input clutch in power communication between the constant speed engine and the multi-speed transmission.

In a further example thereof, the modulating includes changing a pressure of a hydraulic fluid to cause an apply piston of the input clutch to move between a first position and a second position, the first position corresponding to a first pressure applied to the disk pack and the second position corresponding to a second pressure applied to the disk pack.

In still another example thereof, the changing the gear ratio occurs over a time period shorter than a time period over which the modulating the power extraction occurs.

In yet still another example thereof, fueling the constant speed engine is performed by an engine control circuit configured to control the constant speed engine, and wherein modulating the power extraction is performed by a transmission control circuit.

### BRIEF DESCRIPTION OF THE DRAWINGS

The above-mentioned and other features and advantages of this disclosure, and the manner of attaining them, will become more apparent and will be better understood by reference to the following description of exemplary embodiments taken in conjunction with the accompanying drawings, wherein:
FIG. 1 illustrates a schematic view of one illustrative embodiment of a power system having a multi-speed automatic transmission coupled with a prime mover through an input coupler;
FIG. 2 illustrates a schematic view of another illustrative embodiment of a power system having a multi-speed automatic transmission coupled with a prime mover through an input coupler;
FIG. 3 illustrates a representative view of a plurality of forward speed ratios of the multi-speed automatic transmission of FIGS. 1 and 2;
FIG. 4A illustrates a representative view of an exemplary planetary gear transmission of the power system of FIGS. 1 and 2 having a plurality of planetary gearsets and a plurality of selective couplers;
FIG. 4B illustrates a representative view of a plurality of forward speed ratios of the planetary gear transmission of FIG. 4A and the corresponding selective coupler configurations provided in a shift logic of a transmission control circuit of the powered vehicular system of FIGS. 1 and 2;
FIG. 5 illustrates a representative view of an operation of the transmission control circuit of the power system of FIGS. 1 and 2 wherein a requested shift change is permitted or denied based on a plurality of operational characteristics;
FIG. 6 is a diagrammatic view of an exemplary multi-speed transmission including four planetary gearsets and six selective couplers;
FIG. 7 is a truth table illustrating the selective engagement of the six selective couplers of FIG. 6 to provide eight forward gear or speed ratios of the multi-speed transmission of FIG. 6;
FIG. 8 illustrates a diagram of a computing system useful in implementing a planetary transmission controller;
FIG. 9 illustrates ports formed in an interface between an input coupler and a multi-speed transmission;
FIG. 10 illustrates a representative view of an exemplary input clutch of the input coupler of FIGS. 1 and 2;
FIG. 11 illustrates exemplary working fluid paths for input clutch of FIG. 10;
FIG. 12 illustrates an enlarged view of an exemplary balance branch of the input clutch of FIGS. 10 and 11; and
FIG. 13 illustrates a time history of performance of a power system of FIGS. 1 and 2 through a shift event.

Corresponding reference characters indicate corresponding parts throughout the several views. The exemplification set out herein illustrates an exemplary embodiment of the invention and such exemplification is not to be construed as limiting the scope of the invention in any manner.

### DETAILED DESCRIPTION

For the purposes of promoting an understanding of the principles of the present disclosure, reference is now made to the embodiment illustrated in the drawings, which is described below. The embodiment disclosed below is not intended to be exhaustive or limit the present disclosure to the precise form disclosed in the following detailed description. Rather, the embodiment is chosen and described so that others skilled in the art may utilize its teachings. Therefore, no limitation of the scope of the present disclosure is thereby intended. Corresponding reference characters indicate corresponding parts throughout the several views.

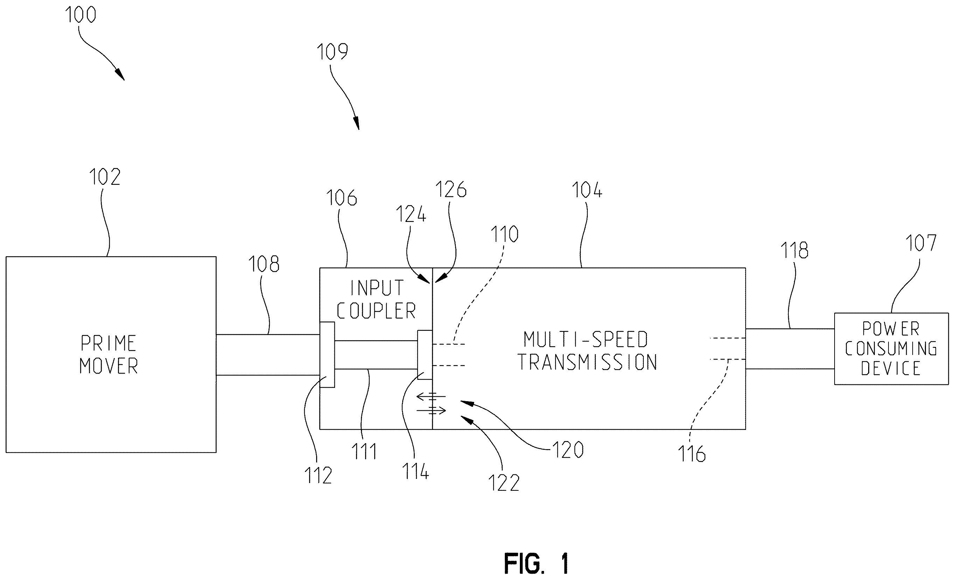

Referring now to FIG. 1, an exemplary schematic view of a power system 100 is shown. Power system 100 includes a prime mover 102 operatively coupled to a multi-speed transmission 104 via a, input coupler 106. Exemplary prime movers include internal combustion engines including any of diesel engines, gasoline engines, and natural gas engines. In embodiments, prime mover 102 may be a constant speed engine, such as constant speed internal combustion engines and constant speed electric motors. In embodiments, the constant speed internal combustion engine may be a natural gas powered constant speed engine. In embodiments, power system 100 may include a power consuming device 107, where power produced from prime mover 102 is delivered, via the multi-speed transmission 104, to power consuming device 107. In embodiments, power consuming device 107 is a hydraulic pump. In embodiments, hydraulic pump may be used in a fracking operation associated with an oil field, where power consuming device 107 is used to pump a working fluid such as liquid water or other suitable fracking fluid at a variety of pressures and flow rates. In embodiments, prime mover 102 may provide power to a hydraulic pump capable of producing hydraulic pressure exceeding 15,000 pounds per square inch (psi) well pressure in a fracking operation and pumping over twenty (20) barrels per minute. Power system 100 may thus be configured to produce an engine output power from the prime mover 102 and convert the engine output power, via the multi-speed transmission 104, to a transmission output torque and a transmission output speed to drive power consuming device 107. Input coupler 106 conveys power produced from prime mover 102 to multi-speed transmission 104. In embodiments, input coupler 106 and multi-speed transmission 104 may form a power transfer system 109.

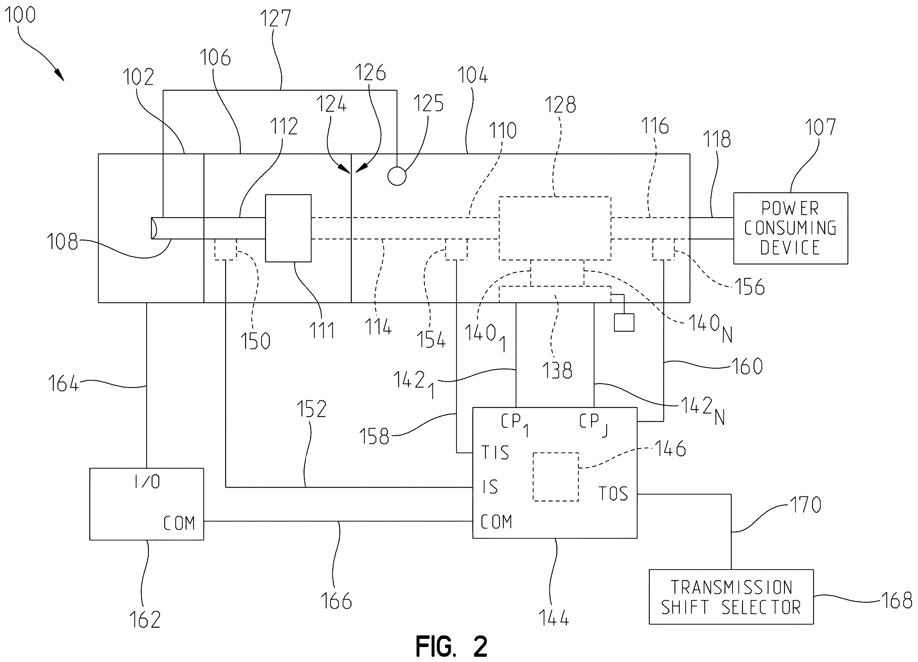

As used herein, the term multi-speed transmission is defined as a transmission being configurable in at least a plurality of forward speed ratios of the output shaft to the input shaft wherein the configuration of the transmission may be controlled through a transmission control circuit 144 (see FIG. 2). As explained herein, transmission control circuit 144 includes a shift logic 148 which includes configuration settings 178₁-178_{L} (see FIG. 2), wherein L is a positive integer equal to 2 or greater, to configure the components of multi-speed transmission 104 in respective forward speed ratios 176₁-176_{L}. Multi-speed transmissions may also include one or more reverse speed ratios. Exemplary multi-speed transmissions include automatic transmissions and automated manual transmissions.

One exemplary automatic transmission includes a plurality of planetary gearsets having a plurality of selective couplers which are controlled by transmission control circuit 144 to configure the transmission in the various forward speed ratios. One exemplary automated manual transmission includes at least one gear carried by the input shaft, at least one gear carried by at least one countershaft, at least one gear carried by the output shaft, and a plurality of synchronizers or couplers that couple together various arrangements of the gears and/or shafts to achieve the plurality of forward speed ratios of the output shaft to the input shaft. Exemplary automated manual transmissions include both sliding mesh transmissions and constant mesh transmissions. Exemplary multi-speed transmissions include both transmissions which continuously provide power from the input shaft to the output shaft during shifting and transmissions wherein power from the input shaft to the output shaft is interrupted during shifting.

Prime mover 102 includes an output shaft 108 that is operatively coupled to a transmission input 110 of multi-speed transmission 104 through input coupler 106. In embodiments, input coupler 106 is a clutch assembly that may include a coupler such as an input clutch 111. Input clutch 111 may take a variety of mechanical forms, including a dry clutch or a wet clutch. For example, exemplary clutches may be shiftable friction-locked multi-disk clutches, shiftable form-locking claw or conical clutches, or any other known form of a clutch. In embodiments, input clutch 111 may include one or more pairs of friction surfaces that are used in conjunction to modulate the extraction of mechanical power between prime mover 102 and multi-speed transmission 104. Output shaft 108 of prime mover 102 rotatably drives a clutch input 112 of input coupler 106. In embodiments, clutch input 112 may take the form of a shaft, wheel, or other device suitable to transfer power from prime mover 102 to input coupler 106.

Input coupler 106 is configured to selectively transfer power from clutch input 112 to a clutch output 114. In embodiments, clutch output 114 may take the form of a shaft, wheel, or other device suitable to transfer power from coupler 106 to multi-speed transmission 104. Transmission input 110 of multi-speed transmission 104 is rotatably driven by clutch output 114 of input coupler 106. In embodiments, transmission input 110 may take the form of a shaft, wheel, or other device suitable to receive power from clutch output 114. Clutch input 112 and clutch output 114 may be located at an outer periphery of input coupler 106. Input coupler 106 includes a housing that encloses an open interior, in which the housing may be defined by interface section 124 and/or clutch output 114 and/or clutch input 112. In embodiments, one or both of clutch input 112 and clutch output 114 may be located internal to an outer periphery of input coupler 106. In such embodiments, one or both of output shaft 108 of prime mover 102 and transmission input 110 of multi-speed transmission 104 may protrude into an interior of the input coupler 106 (e.g., intrude past the outer periphery of input coupler 106).

Multi-speed transmission 104 includes a transmission output 116 operatively coupled to transmission input 110. Transmission output 116 rotatably drives a drive input 118 of power consuming device 107. In embodiments, transmission output 116 may take the form of a shaft, wheel, or other device suitable to receive power from clutch output 114. Furthermore, in embodiments, drive input 118 may take the form of a shaft, wheel, or other device suitable to receive power from multi-speed transmission 104.

As is discussed further herein, input coupler 106 and multi-speed transmission 104 are capable of changing state (e.g., changing from a coupled configured to an uncoupled configuration in the case of input coupler 106; changing between gear sets in the case of multi-speed transmission 104) through use of actuation. In embodiments, input coupler 106 and multi-speed transmission 104 are capable of changing state through use of hydraulic power. For example, input coupler 106 can receive pressurized hydraulic fluid and, on the basis of the level of pressure in the hydraulic fluid, configure itself to change state between a coupled condition and an uncoupled condition. Input coupler 106 and multi-speed transmission 104 are configured to share hydraulic fluid to enable hydraulic powered actuation to change state of each of input coupler 106 and multi-speed transmission 104.

FIG. 1 illustrates an exchange of hydraulic fluid between input coupler 106 and multi-speed transmission 104. Port 120 is formed in the interface between input coupler 106 and multi-speed transmission 104 to permit flow of hydraulic fluid from multi-speed transmission 104 to input coupler 106. Port 122 is formed in the interface between input coupler 106 and multi-speed transmission 104 to permit flow of hydraulic fluid from input coupler 106 to multi-speed transmission 104. In embodiments, either or both of port 120 and port 122 may comprise openings in a housing of input coupler 106 and/or multi-speed transmission 104. For example, port 120 may be an opening formed in an interface section 124 of input coupler 106 and which is positioned in proximity with a larger sized cavity formed in an interface section 126 of multi-speed transmission 104. In such an embodiment, the interface section 124 of input coupler 106 may be a cover, or part of a cover, used to enclose an open interior of input coupler 106. In embodiments, interface section 126 of multi-speed transmission 104 may also be a cover, or part of a cover, used to enclose an open interior of multi-speed transmission 104. Input coupler 106, therefore, may be a separate construction capable of being assembled in part or in whole and thereafter attached to multi-speed transmission 104, where the coupling of input coupler 106 and multi-speed transmission 104 forms port 120 and port 122 to permit hydraulic fluid to flow between input coupler 106 and multi-speed transmission 104. In embodiments, one or both of port 120 and port 122 includes a one-way valve, such as a check valve.

In conventional constructions involving multi-speed transmission 104 coupled with a torque converter in lieu of input coupler 106 disclosed herein, the torque converter in those constructions may be removed and replaced with input coupler 106, in which port 120 and port 122 provided with input coupler 106 includes a compatible form factor and/or footprint which permit removal of the torque converter and replacement with input coupler 106 resulting in the combination of input coupler 106 and multi-speed transmission 104 for use with prime mover 102 disclosed herein.

Turning now to FIGS. 2-4B, further details and/or variations of power system 100 are illustrated. Multi-speed transmission 104 includes a pump 125 for building pressure within different fluid flow circuits (e.g., a main circuit, a lube circuit, hydraulic flow circuit through port 120 and through port 122, etc.) of multi-speed transmission 104. Pump 125 may be driven by power from prime mover 102, schematically illustrated as reference number 127. Such power may be mechanical and/or electrical. In embodiments, pump 125 may be mechanically driven by prime mover 102 through an offtake shaft, or through output shaft 108. Thus, power from prime mover 102 may be used to drive pump 125 and build pressure within the various fluid flow circuits of multi-speed transmission 104 and/or fluid flow circuit(s) that pass between input coupler 106 and multi-speed transmission 104. Pump 125 may also regulate fluid pressure in the hydraulic fluid routed through port 120 for use in input coupler 106 as described elsewhere herein. In embodiments, pump 125 is integrated with multi-speed transmission 104. For example, pump 125 may be affixed to an outer housing of multi-speed transmission 104 where it may be removed and easily serviced. In other embodiments, pump 125 may be located internal to an outer housing of multi-speed transmission 104. In embodiments, pump 125 may be a variable speed and/or variable pressure pump. In other embodiments, pump 125 may be a constant speed and/or constant pressure pump, which is coupled with a pressure valve capable of being regulated (e.g., capable of being controlled by transmission control circuit 144) to provide variable pressure and/or variable flow rate of hydraulic fluid.

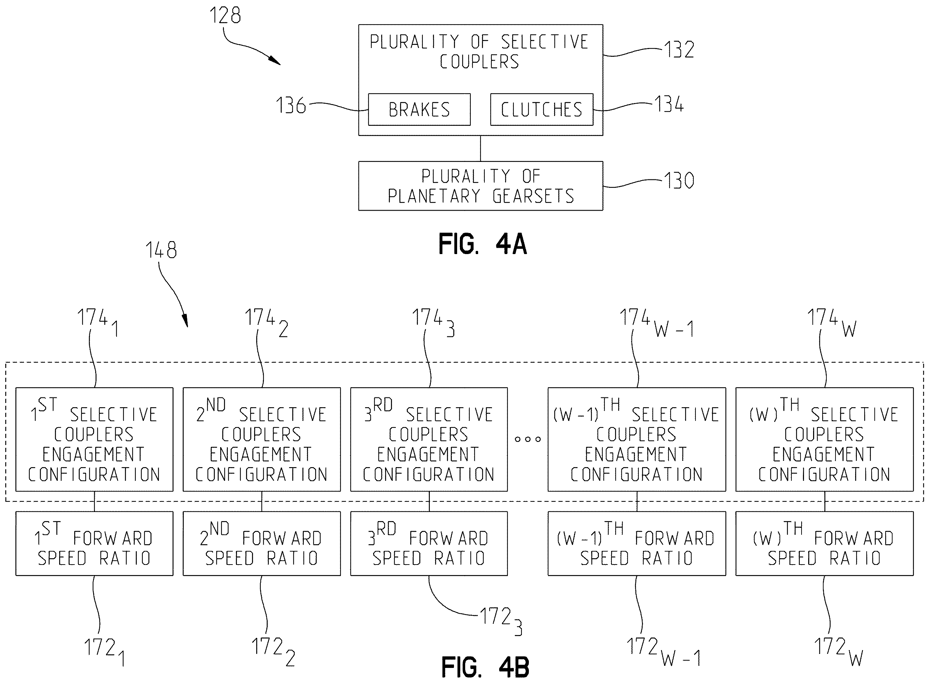

Multi-speed transmission 104 includes a multi-speed planetary transmission 128. Referring to FIG. 4A, multi-speed planetary transmission 128 includes a plurality of planetary gearsets 130 and a plurality of selective couplers 132 which are operatively coupled to the plurality of planetary gearsets 130. Each planetary gearset includes at least four components: a sun gear; a ring gear; a plurality of planet gears; and a carrier that is rotatably coupled to and carries the planet gears. In the case of a simple planetary gearset, the teeth of the sun gear are intermeshed with the teeth of the planet gears which are in turn engaged with the teeth of the ring gear. Each of these components may also be referred to as a gearset component. Each of the sun gear, the planet carrier, and the ring gear of a respective planetary gearset of the plurality of planetary gearsets 130 may be fixedly coupled to one or more of transmission input 110; transmission output 116 of multi-speed planetary transmission 128; another one or more of the sun gear, the planet carrier, and the ring gear of one or more of the plurality of planetary gearsets; one or more of the selective couplers; a stationary member of the transmission, such as a housing; and combinations thereof.

It will be apparent to one of skill in the art that some planetary gearsets may include further components than those explicitly identified. For example, one or more of the planetary gearsets may include two sets of planet gears. A first set of planet gears may intermesh with the sun gear while the second set of planet gears intermesh with the first set of planet gears and the ring gear. Both sets of planet gears are carried by the planet carrier. Although multi-speed transmission 104 is illustrated as multi-speed planetary transmission 128 in FIG. 4A, multi-speed transmission 104 may alternatively be structured in other arrangement to provide a plurality of forward speed ratios or gears.

As used herein, a selective coupler 132 is a device which may be actuated to fixedly couple two or more components together. A selective coupler 132 fixedly couples two or more components to rotate together as a unit when the selective coupler is in an engaged configuration. Further, the two or more components may be rotatable relative to each other when the selective coupler is in a disengaged configuration. The terms "couples", "coupled", "coupler" and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

A first exemplary selective coupler is a clutch 134. A clutch 134 couples two or more rotating components to one another so that the two or more rotating components rotate together as a unit in an engaged configuration and permits relative rotation between the two or more rotating components in the disengaged position. Exemplary clutches may be shiftable friction-locked multi-disk clutches, shiftable form-locking claw or conical clutches, wet clutches, or any other known form of a clutch.

A second exemplary selective coupler is a brake 136. A brake 136 couples one or more rotatable components to a stationary component to hold the one or more rotatable components stationary relative to the stationary component in the engaged configuration and permits rotation of the one or more components relative to the stationary component in the disengaged configuration. Exemplary brakes may be configured as shiftable-friction-locked disk brakes, shiftable friction-locked band brakes, shiftable form-locking claw or conical brakes, or any other known form of a brake.

Selective couplers 132 may be actively controlled devices or passive devices. Exemplary actively controlled devices include hydraulically actuated clutch or brake elements and electrically actuated clutch or brake elements. Returning to FIG. 2, multi-speed transmission 104 further includes an electro-hydraulic system 138 that is fluidly coupled to multi-speed planetary transmission 128 via a number, N, of fluid paths, 140₁ -140_{N}, where N may be any positive integer. In response to control signals 142₁-142_{N} from transmission control circuit 144, electro-hydraulic system 138 selectively cause fluid to flow through one or more of the fluid paths, 140₁-140_{N}, to thereby control the engagement or disengagement of selective couplers 132 of multi-speed planetary transmission 128.

In addition to coupling through selective couplers 132, various ones of the sun gears, the planet carriers, and the ring gears of the planetary gearsets 130 may be fixedly coupled together continuously throughout the operation of the disclosed transmissions. Components may be fixedly coupled together either permanently or removably. Components may be fixedly coupled together through spline connections, press fitting, fasteners, welding, machined or formed functional portions of a unitary piece, or other suitable methods of connecting components.

One or more rotating components, such as shafts, drums, and other components, may be collectively referred to as an interconnector when the one or more components are fixedly coupled together. Interconnectors may further be fixedly coupled to one or more gearset components of planetary gearsets 130 and/or one or more selective couplers 132.

Multi-speed planetary transmission 128 transfers torque from transmission input 110 to transmission output 116. Further, by selectively engaging various combinations of selective couplers 132, multi-speed planetary transmission 128 is able to vary a speed ratio of transmission output 116 relative to transmission input 110 for a plurality of forward gears or speed ratios (transmission input 110 and transmission output 116 both rotating in the same direction) and at least one reverse gear or speed ratio (transmission input 110 and transmission output 116 rotating in opposite directions). The changing or shifting between the various gears of multi-speed planetary transmission 128 is accomplished by selectively controlling the respective engagement and disengagement of selective couplers 132 via control of fluid pressure within the number of fluid paths 140₁-140_{N}.

Returning to FIG. 1, power system 100 further includes a transmission control circuit 144. In the illustrated embodiment, transmission control circuit 144 is microprocessor-based and includes a non-transitory computer readable medium 146 which includes processing instructions stored therein that are executable by the microprocessor of transmission control circuit 144 to control operation of input coupler 106 and of multi-speed transmission 104. A non-transitory computer-readable medium, or memory, may include random access memory (RAM), read-only memory (ROM), erasable programmable read-only memory (e.g., EPROM, EEPROM, or Flash memory), or any other tangible medium capable of storing information.

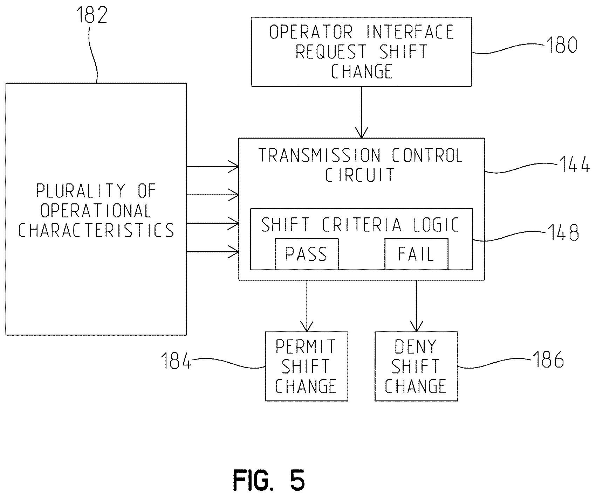

For example, transmission control circuit 144 may execute a shift criteria logic 148 (see FIG. 5) which provides control signals to electro-hydraulic system 138 over control lines 142₁-142_{N} to achieve various configurations of multi-speed transmission 104 which results in respective forward speed or gear ratios. In the case of multi-speed planetary transmission 128, shift logic 148 may selectively engage and disengage various ones of selective couplers 132 resulting in multi-speed planetary transmission 128 shifting between various gear or speed ratios of planetary gearsets 130. The term "logic" as used herein includes software and/or firmware executing on one or more programmable processors, application-specific integrated circuits, field-programmable gate arrays, digital signal processors, hardwired logic, or combinations thereof. Therefore, in accordance with the embodiments, various logic may be implemented in any appropriate fashion and would remain in accordance with the embodiments herein disclosed. A non-transitory machine-readable medium comprising logic can additionally be considered to be embodied within any tangible form of a computer-readable carrier, such as solid-state memory, magnetic disk, and optical disk containing an appropriate set of computer instructions and data structures that would cause a processor to carry out the techniques described herein. This disclosure contemplates other embodiments in which transmission control circuit 144 is not microprocessor-based, but rather is configured to control operation of the input coupler 106 and/or multi-speed transmission 104 based on one or more sets of hardwired instructions and/or software instructions stored in the non-transitory computer readable medium 146. Further, transmission control circuit 144 may be contained within a single device or be a plurality of devices networked together to provide the functionality described herein.

Transmission control circuit 144 receives multiple inputs that may be used by shift criteria logic 148 to determine whether to shift between various gears of multi-speed transmission 104, such as various gears of planetary gearsets 130 of multi-speed planetary transmission 128 in the illustrated embodiment. Referring to FIG. 1, power system 100 includes a number of sensors associated with one of multi-speed transmission 104 and input coupler 106 and configured to produce indications of one or more operating states of multi-speed transmission 104 and input coupler 106, respectively. The sensors may either actively provide an indication by sending a sensor signal or passively provide an indication by making available a monitored characteristic, such as a voltage, a temperature, a pressure or other suitable characteristics. Sensors are one type of operational characteristic monitoring devices.

For example, input coupler 106 illustratively includes a conventional speed sensor 150 that is positioned to provide an indication of a rotational speed of clutch input 112 which also corresponds to the rotational speed of output shaft 108 of prime mover 102. Speed sensor 150 is electrically connected to an input speed, IS, of transmission control circuit 144 via a signal path 152. Transmission control circuit 144 processes the indication of the rotational speed of clutch input 112 in a conventional manner to determine the rotational speed of clutch input 112 of input coupler 106 and hence of output shaft 108 of prime mover 102. In embodiments, speed sensor 150 may be placed outside of input coupler 106, such as on output shaft 108. Furthermore, speed sensor 150 may be placed between input clutch 111 and multi-speed planetary transmission 128. In embodiments, speed sensor 150 may be placed to measure speed of clutch output 114. Still further, some embodiments may not include speed sensor 150.

In a similar fashion, multi-speed transmission 104 includes a first conventional speed sensor 154 that is positioned to provide an indication of a rotational speed of transmission input 110 which may be the same as a rotational speed of clutch output 114, and a second conventional speed sensor 156 that is positioned to provide an indication of a rotational speed of transmission output 116. Speed sensor 154 is electrically connected to a transmission input shaft speed input, TIS, of transmission control circuit 144 via a signal path 158. Transmission control circuit 144 processes the indication of the rotational speed of transmission input 110 in a conventional manner to determine the rotational speed of transmission input 110. Speed sensor 156 is electrically connected to a transmission output shaft speed input, TOS, of transmission control circuit 144 via a signal path 160. Transmission control circuit 144 processes the indication of the rotational speed of transmission output 116 in a conventional manner to determine the rotational speed of transmission output 116.

In the illustrated embodiment, power system 100 further includes a prime mover control circuit 162 having an input/output port (I/O) that is electrically coupled to prime mover 102 via a signal path 164. Prime mover control circuit 162 may be conventional, and is operable to control and manage the overall operation of prime mover 102. Prime mover control circuit 162 may be used to start the prime mover 102, transition prime mover 102 from an OFF condition to an ON condition that provides mechanical output power, and/or controls fueling to the prime mover 102 such as, for example, to provide constant speed regulation of prime mover 102. For example, if prime mover control circuit 162 determines that a speed of output shaft 108 is below a threshold speed, prime mover control circuit 162 may increase a fuel flow to prime mover 102 to remedy an excursion of speed from a threshold criteria. In embodiments, speed sensor 150 may be located on output shaft 108 and in communication with prime mover control circuit 162 via signal path 152 to control the state of operation of prime mover 102.

In embodiments, prime mover control circuit 162 may include a communication port, COM, which is electrically connected to a similar communication port, COM, of transmission control circuit 144 via one or more signal paths 166. The one or more signal paths 166 are typically referred to collectively as a data link. Transmission control circuit 144 and prime mover control circuit 162 are operable to exchange information via the one or more signal paths 166 in a conventional manner. In one embodiment, for example, transmission control circuit 144 and prime mover control circuit 162 are operable to exchange information via the one or more signal paths 166 in the form of one or more messages in accordance with a society of automotive engineers (SAE) J-1939 communications protocol, although this disclosure contemplates other embodiments in which transmission control circuit 144 and prime mover control circuit 162 are operable to exchange information via the one or more signal paths 166 in accordance with one or more other conventional communication protocols. Although shown as a wired connection, in embodiments, communication between transmission control circuit 144 and prime mover control circuit 162 may be over a wireless network. Although prime mover control circuit 162 is described herein as electrical in nature, in other embodiments, prime mover control circuit 162 may be mechanical in nature. For example, in embodiments, prime mover control circuit 162 may include a mechanical regulator configured to mechanically open a fuel flow valve to increase fueling to prime mover 102 in response to a decrease in speed of prime mover 102.

Power system 100 may include an operator interface having a transmission shift selector 168. Transmission shift selector 168 is operatively coupled to transmission control circuit 144 over signal line 170. Transmission shift selector 168 provides the operator with one or more inputs through which the operator may communicate a desired gear setting to transmission control circuit 144. For example, an operator may request the multi-speed transmission 104 be placed in a forward gear, a reverse gear, or a neutral configuration. Further, transmission shift selector 168 may provide the operator with inputs to select a desired forward gear or speed ratio. Transmission control circuit 144 monitors the state of transmission shift selector 168 or otherwise receives an indication of the state of transmission shift selector 168 and sets a configuration of multi-speed transmission 104 accordingly.

Referring to FIG. 4B, shift criteria logic 148 may configure planetary gearsets 130 of multi-speed planetary transmission 128 in a number (W) of forward gears or speed ratios 172₁-172_{W}, wherein W is a positive integer with a value at least equal to two. In one embodiment, W is equal to or greater than six. In another embodiment, W is equal to or greater than nine. Each of forward gears 172₁-172_{W} are established based on respective engagement configurations, 174₁-174_{W}, of selective couplers 132 of multi-speed planetary transmission 128. Exemplary architectures for multi-speed planetary transmission 128 are disclosed in US Published Patent Application No. 2016/0116025, filed October 21, 2015, titled MULTI-SPEED TRANSMISSION; US Published Patent Application No. 2016/0116026, filed October 22, 2015, titled MULTI-SPEED TRANSMISSION; US Published Patent Application No. 2016/0116027, filed October 22, 2015, titled MULTI-SPEED TRANSMISSION; US Published Patent Application No. 2016/0116028, filed October 22, 2015, titled MULTI-SPEED TRANSMISSION; US Published Patent Application No. 2016/0116029, filed October 22, 2015, titled MULTI-SPEED TRANSMISSION; US Published Patent Application No. 2016/0138680, filed January 21, 2016, titled MULTI-SPEED TRANSMISSION; US Published Patent Application No. 2016/0138681, filed January 21, 2016, titled MULTI-SPEED TRANSMISSION; US Published Patent Application No. 2016/0138682, filed January 21, 2016, titled MULTI-SPEED TRANSMISSION; US Published Patent Application No. 2016/0040754, filed August 7, 2014, titled MULTI-SPEED TRANSMISSION; and US Published Patent Application No. 2016/0047440, filed August 12, 2014, titled MULTI-SPEED TRANSMISSION, the entire disclosures of which are expressly incorporated by reference herein.

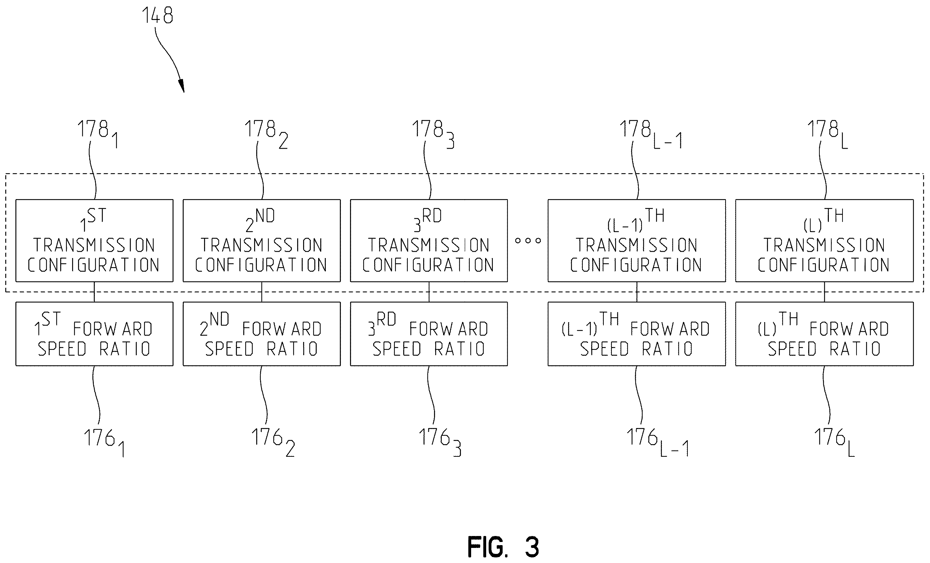

Shift criteria logic 148 of transmission control circuit 144 selects which one of forward gears 176₁-176_{L} illustrated in FIG. 3 (172₁-172_{W} for multi-speed planetary transmission 128) to be established and when to switch between forward gears 176₁-176_{L} (172₁-172_{W} for multi-speed planetary transmission 128) based on various inputs and desired operation of power system 100. For example, shift criteria logic 148 may include control logic that determines to shift between the various forward gears 176₁-176_{L} (172₁-172_{W} for multi-speed planetary transmission 128) based on desired performance characteristics for power system 100. Exemplary performance characteristics include increasing fuel economy, decreasing wear on brake components, and other performance characteristics. Exemplary control logics are disclosed in US Patent No. 8,332,108, filed June 1, 2009, titled SYSTEM FOR DETERMINING A VEHICLE MASS-BASED BREAKPOINT FOR SELECTING BETWEEN TWO DIFFERENT TRANSMISSION SHIFT SCHEDULES; US Patent No. 8,935,068, filed June 18, 2013, titled SYSTEM AND METHOD FOR OPTIMIZING DOWNSHIFTING OF A TRANSMISSION DURING VEHICLE DECELERATION; US Patent No. 9,365,201, filed Mar. 15, 2013, titled DEVICE, SYSTEM, AND METHOD FOR CONTROLLING TRANSMISSION TORQUE TO PROVIDE HILL ASCENT AND/OR DESCENT ASSISTANCE USING ROAD GRADE; US Published Patent Application No. 2015/0292615, filed April 11, 2014, titled SYSTEM AND METHOD FOR AUTOMATIC NEUTRAL AND AUTOMATIC RETURN-TO-RANGE FOR USE WITH AN AUTOMATIC TRANSMISSION; US Published Patent Application No. 2016/0017813, filed Oct. 6, 2015, titled METHOD OF SETTING TRANSMISSION SHIFT POINTS IN REAL-TIME BASED UPON AN ENGINE PERFORMANCE CURVE, the entire disclosures of which are expressly incorporated by reference herein.

As mentioned herein, shift criteria logic 148 automatically selects between forward gears 176₁-176_{L} (172₁-172_{W} for multi-speed planetary transmission 128) based on various inputs and further based on various performance characteristics of power system 100. There are instances wherein an operator of power system 100 may desire to elect a different forward gear 176₁-176_{L} (172₁-172_{W} for multi-speed planetary transmission 128) than the current forward gear 176₁-176_{L} (172₁-172_{W} for multi-speed planetary transmission 128) selected by shift criteria logic 148. Transmission shift selector 168 may be used by an operator to request a manual shift up (↑) and/or a manual shift down (↓). Transmission control circuit 144 is responsive to user selection of manual shift up (↑) to configure multi-speed transmission 104, illustratively multi-speed planetary transmission 128, to select a next higher forward gear of multi-speed transmission 104 than the one currently established. For instance, if multi-speed transmission 104 is operating in third gear, the selection of manual shift up (↑) via transmission shift selector 168 would cause shift criteria logic 148 of transmission control circuit 144 to configure multi-speed transmission 104 to operate in fourth gear, configure selective couplers 132 for the illustrated multi-speed planetary transmission 128. In a similar fashion, transmission control circuit 144 is responsive to user selection of manual shift down (↓) to configure multi-speed transmission 104 to select the next lower forward gear of multi-speed transmission 104 than the one currently established. For instance, if multi-speed transmission 104 is operating in third gear, the selection of manual shift down (↓) would cause shift criteria logic 148 of transmission control circuit 144 to configure multi-speed transmission 104 to operate in second gear, configure selective couplers 132 for the illustrated multi-speed planetary transmission 128. As explained herein, shift criteria logic 148 includes additional logic which determines when to permit shifting of gears in response to a selection of either manual shift up (↑) or manual shift down (↓) based on additional characteristics of power system 100. In some embodiments, power system 100 may be configured to automatically perform a shift up (↑) and/or a shift down (↓) without need of input from transmission shift selector 168.

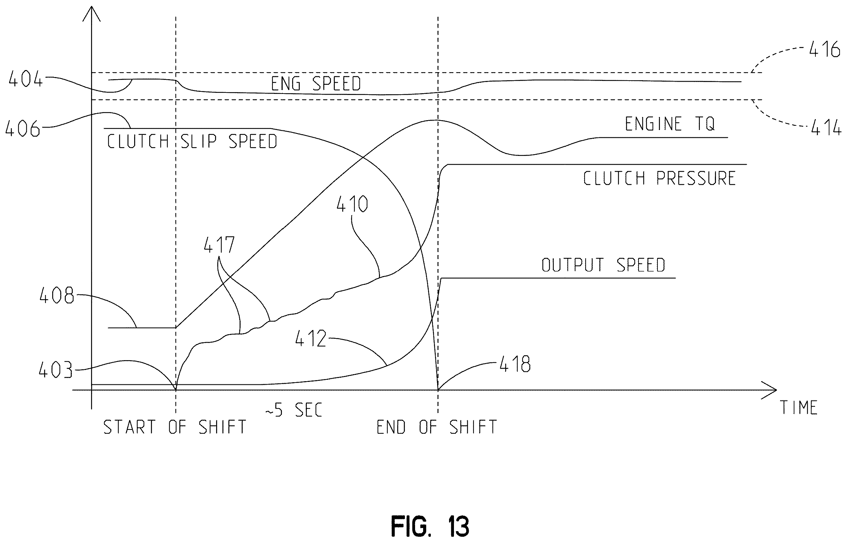

Referring to FIG. 5, transmission control circuit 144 receives an input, such as from a transmission shift selector 168 of an operator interface or internally within transmission control circuit based on speed sensor 154 and/or speed sensor 156, of a requested shift change 180. Shift criteria logic 148 determines whether the requested shift change 180 passes a shift criteria based on a plurality of operational characteristics 182. In embodiments, shift criteria may include a determination of whether a shift event is needed and/or if a shift event has ended. For example, as discussed further herein with respect to FIG. 1, start of shift 403 (see FIG. 13) may be determined by transmission control circuit 144 and end of shift 418 (see FIG. 13) may be determined by transmission control circuit 144. If end of shift 418 has not been determined by transmission control circuit 144, then the shift criteria 148 is not satisfied and a further shift event is inhibited, leading to block 186. If end of shift 418 has been determined by transmission control circuit 144, then the shift criteria is satisfied and a further shift event is permitted, leading to block 184. To continue with the example with further reference to FIG. 5, if the shift criteria is passed, transmission control circuit 144 permits the requested shift change to occur, as represented by block 184. For instance, if multi-speed planetary transmission 128 is in 3^{rd} gear 172₃ (see FIG. 4B) and the input, such as operator actuates transmission shift selector 168 (see FIG. 2), to request 2^{nd} gear 172₂, shift criteria logic 148 would alter the configuration of selective couplers 132 of multi-speed planetary transmission 128 to correspond to selective coupler engagement configuration 174₂ (see FIG. 4B) which places multi-speed planetary transmission 128 in 2^{nd} gear 172₂ (see FIG. 4B). If the shift criteria 148 fails, transmission control circuit 144 denies the requested shift change, as represented by block 186, and multi-speed planetary transmission 128 remains in the current gear selected by shift criteria logic 148.

The plurality of operational characteristics 182 are monitored by a plurality of operational characteristic monitors. By monitoring, an operational characteristic monitor may sense a value indicative of a parameter or determine a parameter based on one or more sensed values and/or determined values.

Exemplary operational characteristics 182 include speed of output shaft 108, engine revolution per minute (RPM) of prime mover 102, speed of drive input 118, and other suitable operational characteristics. It is contemplated that any number of the disclosed plurality of operational characteristics 182 may be used, individually or in combination, by shift criteria logic 148 to determine whether to permit the requested shift change, block 184, or deny the requested shift change, block 186. Various examples are provided herein.

In one embodiment, an engine load is monitored by any suitable speed sensor (e.g., sensor 150, sensor 154, and/or sensor 156) or may be communicated by prime mover control circuit 162. In one embodiment, the engine load is a measure of the engine torque. In another embodiment, the engine load is a measure of the engine horsepower. The engine load provides an indication of the demand on prime mover 102. In one embodiment, the engine load is estimated based on a rate that fuel is provided to prime mover 102 in the case of an internal combustion engine. A higher fuel rate may indicate increased power demand of power system 100 while a lower fuel rate may indicate decreased power demand of power system 100.

In one embodiment, a current transmission gear is monitored by transmission control circuit 144. In the illustrated embodiment, transmission control circuit 144 selects the current gear by controlling the configuration of selective couplers 132 of multi-speed planetary transmission 128. In one example, shift criteria logic 148 may only permit requested shift changes 180 for certain current gears of multi-speed planetary transmission 128. In one example, multi-speed planetary transmission 128 includes at least seven forward gears and transmission control circuit 144 permits a requested shift change only when the current gear of multi-speed planetary transmission 128 is fifth or lower and denies the requested shift change when the current gear is sixth or higher. As mentioned herein, multiple ones of the various plurality of operational characteristics 182 may be combined together to form shift criteria logic 148. For instance, for the example just provided, the current gear setting is one parameter used for determining whether to permit or deny operator interface requested shift change 180 and at least one additional parameter, such as road grade and status of service brake, is used.

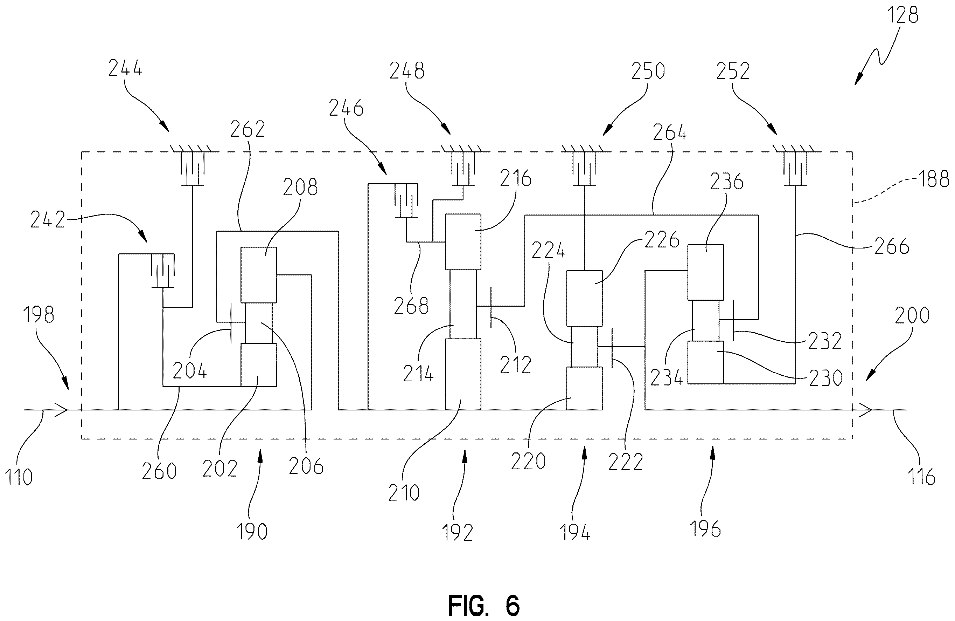

FIG. 6 is a diagrammatic representation of a multi-speed planetary transmission 128. Multi-speed planetary transmission 128 includes a transmission input 110 and a transmission output 116. Each of transmission input 110 and transmission output 116 is rotatable relative to at least one stationary member 188. An exemplary transmission input 110 is an input shaft or other suitable rotatable component. An exemplary transmission output 116 is an output shaft or other suitable rotatable component. An exemplary stationary member 188 is a housing of multi-speed planetary transmission 128. The housing may include several components coupled together.

Multi-speed planetary transmission 128 includes the plurality of planetary gearsets 130, illustratively a first planetary gearset 190, a second planetary gearset 192, a third planetary gearset 194, and a fourth planetary gearset 196. In one embodiment, additional planetary gearsets may be included. Further, although first planetary gearset 190, second planetary gearset 192, third planetary gearset 194, and fourth planetary gearset 196 are illustrated as simple planetary gearsets, it is contemplated that compound planetary gearsets may be included in some embodiments.

In one embodiment, multi-speed planetary transmission 128 is arranged as illustrated in FIG. 6, with first planetary gearset 190 positioned between a first location or end 198 at which transmission input 110 enters stationary member 188 and second planetary gearset 192, second planetary gearset 192 is positioned between first planetary gearset 190 and third planetary gearset 194, third planetary gearset 194 is positioned between second planetary gearset 192 and fourth planetary gearset 196, and fourth planetary gearset 196 is positioned between third planetary gearset 194 and a second location or end 200 at which transmission output 116 exits stationary member 188. In alternative embodiments, first planetary gearset 190, second planetary gearset 192, third planetary gearset 194, and fourth planetary gearset 196 are arranged in any order relative to end 198 and end 200. In embodiments, each of first planetary gearset 190, second planetary gearset 192, third planetary gearset 194, and fourth planetary gearset 196 are axially aligned. In one example, transmission input 110 and transmission output 116 are also axially aligned with first planetary gearset 190, second planetary gearset 192, third planetary gearset 194, and fourth planetary gearset 196. In alternative embodiments, one or more of transmission input 110, transmission output 116, first planetary gearset 190, second planetary gearset 192, third planetary gearset 194, and fourth planetary gearset 196 are offset and not axially aligned with the remainder.

First planetary gearset 190 includes a sun gear 202, a planet carrier 204 supporting a plurality of planet gears 206, and a ring gear 208. Second planetary gearset 192 includes a sun gear 210, a planet carrier 212 supporting a plurality of planet gears 214, and a ring gear 216. Third planetary gearset 194 includes a sun gear 220, a planet carrier 222 supporting a plurality of planet gears 224, and a ring gear 226. Fourth planetary gearset 196 includes a sun gear 230, a planet carrier 232 supporting a plurality of planet gears 234, and a ring gear 236.

Multi-speed planetary transmission 128 further includes a plurality of selective couplers, illustratively a first selective coupler 242, a second selective coupler 244, a third selective coupler 246, a fourth selective coupler 248, a fifth selective coupler 250, and a sixth selective coupler 252. In the illustrated embodiment, first selective coupler 242 and third selective coupler 246 are clutches and second selective coupler 244, fourth selective coupler 248, fifth selective coupler 250, and sixth selective coupler 252 are brakes. The axial locations of the clutches and brakes relative to the plurality of planetary gearsets may be altered from the illustrated axial locations.

Multi-speed planetary transmission 128 includes several components that are illustratively shown as being fixedly coupled together. Transmission input 110 is fixedly coupled to ring gear 208 of first planetary gearset 190 and first selective coupler 242. Transmission output 116 is fixedly coupled to planet carrier 222 of third planetary gearset 194 and ring gear 236 of fourth planetary gearset 196. Sun gear 202 of first planetary gearset 190 is fixedly coupled to first selective coupler 242 and second selective coupler 244. Planet carrier 204 of first planetary gearset 190 is fixedly coupled to third selective coupler 246, sun gear 210 of second planetary gearset 192, and sun gear 220 of third planetary gearset 194. Planet carrier 212 of second planetary gearset 192 is fixedly coupled to ring gear 226 of third planetary gearset 194, planet carrier 232 of fourth planetary gearset 196, and fifth selective coupler 250. Ring gear 216 of second planetary gearset 192 is fixedly coupled to third selective coupler 246 and fourth selective coupler 248. Sun gear 230 of fourth planetary gearset 196 is fixedly coupled to sixth selective coupler 252. In alternative embodiments, one or more of the components fixedly coupled together are selectively coupled together through one or more selective couplers.

Multi-speed planetary transmission 128 may be described as having seven interconnectors. Transmission input 110 is a first interconnector that both provides input torque to multi-speed planetary transmission 128 and fixedly couples ring gear 208 of first planetary gearset 190 to first selective coupler 242. Transmission output 116 is a second interconnector that both provides output torque from multi-speed planetary transmission 128 and fixedly couples ring gear 236 of fourth planetary gearset 196 to planet carrier 222 of third planetary gearset 194. A third interconnector 260 fixedly couples sun gear 202 of first planetary gearset 190, first selective coupler 242, and second selective coupler 244 together. A fourth interconnector 262 fixedly couples planet carrier 204 of first planetary gearset 190, sun gear 210 of second planetary gearset 192, sun gear 220 of third planetary gearset 194, and third selective coupler 246 together. A fifth interconnector 264 fixedly couples planet carrier 212 of second planetary gearset 192, ring gear 226 of third planetary gearset 194, planet carrier 232 of fourth planetary gearset 196, and fifth selective coupler 250 together. A sixth interconnector 266 fixedly couples sun gear 230 of fourth planetary gearset 196 and sixth selective coupler 252 together. A seventh interconnector 268 fixedly couples ring gear 216 of second planetary gearset 192, third selective coupler 246, and fourth selective coupler 248 together.

Multi-speed planetary transmission 128 further includes several components that are illustratively shown as being selectively coupled together through selective couplers. First selective coupler 242, when engaged, fixedly couples ring gear 208 of first planetary gearset 190 and transmission input 110 to at least a portion of second selective coupler 244 and to sun gear 202 of first planetary gearset 190. When first selective coupler 242 is engaged, sun gear 202 and ring gear 208 of first planetary gearset 190 are locked together. Therefore, sun gear 202, planet carrier 204, and ring gear 208 of first planetary gearset 190 all rotate together as a single unit. The same effect may be realized by coupling any two of sun gear 202, planet carrier 204, and ring gear 208 of first planetary gearset 190 together. When first selective coupler 242 is disengaged, transmission input 110 and ring gear 208 of first planetary gearset 190 may rotate relative to third selective coupler 246 and sun gear 202 of first planetary gearset 190.

Second selective coupler 244, when engaged, fixedly couples at least a portion of first selective coupler 242 and sun gear 202 of first planetary gearset 190 to stationary member 188. When second selective coupler 244 is disengaged, first selective coupler 242 and sun gear 202 of first planetary gearset 190 may rotate relative to stationary member 188.

Third selective coupler 246, when engaged, fixedly couples planet carrier 204 of first planetary gearset 190, sun gear 210 of second planetary gearset 192, sun gear 220 of third planetary gearset 194 to ring gear 216 of second planetary gearset 192. When third selective coupler 246 is engaged, sun gear 210 and ring gear 216 of second planetary gearset 192 are locked together. Therefore, sun gear 210, planet carrier 212, and ring gear 216 of second planetary gearset 192 all rotate together as a single unit. The same effect may be realized by coupling any two of sun gear 210, planet carrier 212, and ring gear 216 of second planetary gearset 192 together. When third selective coupler 246 is disengaged, planet carrier 204 of first planetary gearset 190, sun gear 210 of second planetary gearset 192, and sun gear 220 of third planetary gearset 194 may rotate relative to ring gear 216 of second planetary gearset 192.

Fourth selective coupler 248, when engaged, fixedly couples ring gear 216 of second planetary gearset 192 to at least one stationary member 188. When fourth selective coupler 248 is disengaged, ring gear 216 of second planetary gearset 192 may rotate relative to at least one stationary member 188.

Fifth selective coupler 250, when engaged, fixedly couples planet carrier 212 of second planetary gearset 192, ring gear 226 of third planetary gearset 194, and planet carrier 232 of fourth planetary gearset 196 to at least one stationary member 188. When fifth selective coupler 250 is disengaged, planet carrier 212 of second planetary gearset 192, ring gear 226 of third planetary gearset 194, and planet carrier 232 of fourth planetary gearset 196 may rotate relative to at least one stationary member 188.

Sixth selective coupler 252, when engaged, fixedly couples sun gear 230 of fourth planetary gearset 196 to at least one stationary member 188. When sixth selective coupler 252 is disengaged, sun gear 230 of fourth planetary gearset 196 may rotate relative to at least one stationary member 188.

By engaging various combinations of first selective coupler 242, second selective coupler 244, third selective coupler 246, fourth selective coupler 248, fifth selective coupler 250, and sixth selective coupler 252, additional components of multi-speed planetary transmission 128 may be fixedly coupled together.

The plurality of planetary gearsets and the plurality of selective couplers of multi-speed planetary transmission 128 may be interconnected in various arrangements to provide torque from transmission input 110 to transmission output 116 in at least eight forward gear or speed ratios.

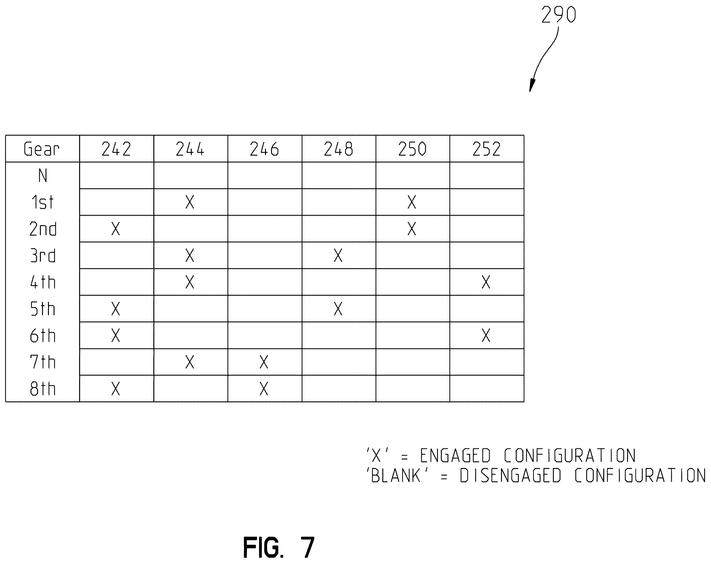

Referring to FIG. 7, an exemplary truth table 290 is shown that provides the state of each of first selective coupler 242, second selective coupler 244, third selective coupler 246, fourth selective coupler 248, fifth selective coupler 250, and sixth selective coupler 252 for eight different forward gear or speed ratios. Each row corresponds to a given interconnection arrangement for multi-speed transmission 104. The first column provides the gear range (1^{st}-8^{th} forward gears). The remaining columns illustrate which ones of the selective couplers 242-252 are engaged ("X" indicates engaged) and which ones of selective couplers 242-252 are disengaged ("(blank)" indicates disengaged). FIG. 7 is only one example of any number of truth tables possible for achieving at least eight forward ratios. Although not provided in truth table 290, various reverse gear ratios are also possible with multi-speed planetary transmission 128.

In the example of FIG. 7, to place multi-speed planetary transmission 128 in neutral (N), all of first selective coupler 242, second selective coupler 244, third selective coupler 246, fourth selective coupler 248, fifth selective coupler 250, and sixth selective coupler 252 are in the disengaged configuration. One or more of first selective coupler 242, second selective coupler 244, third selective coupler 246, fourth selective coupler 248, fifth selective coupler 250, and sixth selective coupler 252 may remain engaged in neutral (Neu) as long as the combination of first selective coupler 242, second selective coupler 244, third selective coupler 246, fourth selective coupler 248, fifth selective coupler 250, and sixth selective coupler 252 does not transmit torque from transmission input 110 to transmission output 116.

A first forward ratio (shown as 1st) in truth table 290 of FIG. 7 is achieved by having second selective coupler 244 and fifth selective coupler 250 in an engaged configuration and first selective coupler 242, third selective coupler 246, fourth selective coupler 248, and sixth selective coupler 252 in a disengaged configuration.

A second or subsequent forward ratio (shown as 2nd) in truth table 290 of FIG. 7 is achieved by having first selective coupler 242 and fifth selective coupler 250 in an engaged configuration and second selective coupler 244, third selective coupler 246, fourth selective coupler 248, and sixth selective coupler 252 in a disengaged configuration. Therefore, when transitioning between the first forward ratio and the second forward ratio, second selective coupler 244 is placed in the disengaged configuration and first selective coupler 242 is placed in the engaged configuration.

A third or subsequent forward ratio (shown as 3rd) in truth table 290 of FIG. 7 is achieved by having second selective coupler 244 and fourth selective coupler 248 in an engaged configuration and first selective coupler 242, third selective coupler 246, fifth selective coupler 250, and sixth selective coupler 252 in a disengaged configuration. Therefore, when transitioning between the second forward ratio and the third forward ratio, both first selective coupler 242 and fifth selective coupler 250 placed in the disengaged configuration and both second selective coupler 244 and fourth selective coupler 248 are placed in the engaged configuration. In the exemplary embodiment shown, placing both first selective coupler 242 and fifth selective coupler 250 in the disengaged configuration and both second selective coupler 244 and fourth selective coupler 248 in the engaged configuration occurs simultaneously. It is contemplated, however, that this transition may be staged or occur sequentially.

A fourth or subsequent forward ratio (shown as 4th) in truth table 290 of FIG. 7 is achieved by having second selective coupler 244 and sixth selective coupler 252 in an engaged configuration and first selective coupler 242, third selective coupler 246, fourth selective coupler 248, and fifth selective coupler 250 in a disengaged configuration. Therefore, when transitioning between the third forward ratio and the fourth forward ratio, fourth selective coupler 248 is placed in the disengaged configuration and sixth selective coupler 252 is placed in the engaged configuration.

A fifth or subsequent forward ratio (shown as 5th) in truth table 290 of FIG. 7 is achieved by having first selective coupler 242 and fourth selective coupler 248 in an engaged configuration and second selective coupler 244, third selective coupler 246, fifth selective coupler 250, and sixth selective coupler 252 in a disengaged configuration. Therefore, when transitioning between the fourth forward ratio and the fifth forward ratio, both second selective coupler 244 and sixth selective coupler 252 are placed in the disengaged configuration and both first selective coupler 242 and fourth selective coupler 248 are placed in the engaged configuration. In the exemplary embodiment shown, placing both second selective coupler 244 and sixth selective coupler 252 in the disengaged configuration and both first selective coupler 242 and fourth selective coupler 248 in the engaged configuration occurs simultaneously. It is contemplated, however, that this transition may be staged or occur sequentially.

A sixth or subsequent forward ratio (shown as 6th) in truth table 290 of FIG. 7 is achieved by having first selective coupler 242 and sixth selective coupler 252 in an engaged configuration and second selective coupler 244, third selective coupler 246, fourth selective coupler 248, and fifth selective coupler 250 in a disengaged configuration. Therefore, when transitioning between the fifth forward ratio and the sixth forward ratio, fourth selective coupler 248 is placed in the disengaged configuration and sixth selective coupler 252 is placed in the engaged configuration.

A seventh or subsequent forward ratio (shown as 7th) in truth table 290 of FIG. 7 is achieved by having second selective coupler 244 and third selective coupler 246 in an engaged configuration and first selective coupler 242, fourth selective coupler 248, fifth selective coupler 250, and sixth selective coupler 252 in a disengaged configuration. Therefore, when transitioning between the sixth forward ratio and the seventh forward ratio, both first selective coupler 242 and sixth selective coupler 252 are placed in the disengaged configuration and both second selective coupler 244 and third selective coupler 246 are placed in the engaged configuration. In the exemplary embodiment shown, placing both first selective coupler 242 and sixth selective coupler 252 in the disengaged configuration and both second selective coupler 244 and third selective coupler 246 in the engaged configuration occurs simultaneously. It is contemplated, however, that this transition may be staged or occur sequentially.

An eighth or subsequent forward ratio (shown as 8th) in truth table 290 of FIG. 7 is achieved by having first selective coupler 242 and third selective coupler 246 in an engaged configuration and second selective coupler 244, fourth selective coupler 248, fifth selective coupler 250, and sixth selective coupler 252 in a disengaged configuration. Therefore, when transitioning between the seventh forward ratio and the eighth forward ratio, second selective coupler 244 is placed in the disengaged configuration and first selective coupler 242 is placed in the engaged configuration.

The present disclosure contemplates that downshifts follow the reverse sequence of the corresponding upshift (as described above). Further, several power-on skip-shifts that are single-transition are possible (e.g., from 1^{st} up to 3^{rd}, from 3^{rd} down to 1^{st}, from 3^{rd} up to 5^{th}, and from 5^{th} down to 3^{rd}

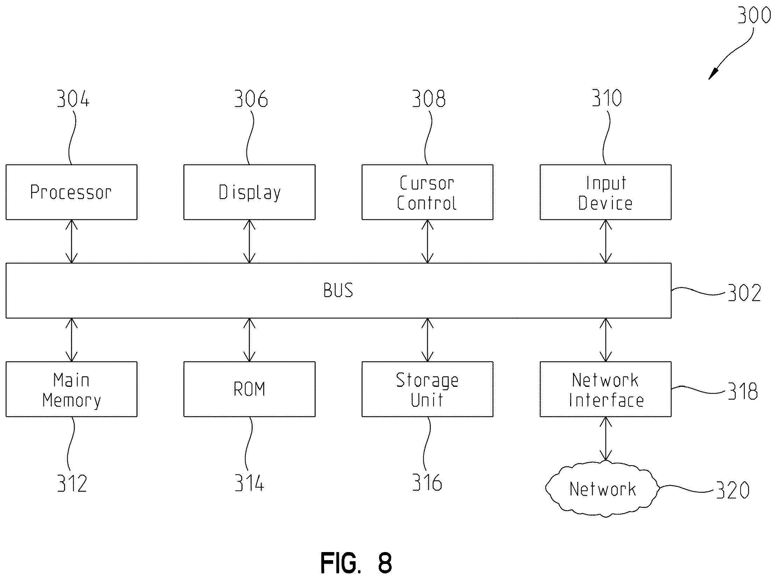

FIG. 8 illustrates a diagram of a computing system 300 for implementing one or more aspects of transmission control circuit 144 and/or prime mover control circuit 162, in accordance with certain embodiments of the present disclosure. For example, some or all of the functions of transmission control circuit 144 may be performed by a computing system that has similar components as the computing system 300. This diagram is merely an example, which should not unduly limit the scope of the claims. One of ordinary skill in the art would recognize many variations, alternatives, and modifications.

Computing system 300 includes a bus 302 or other communication mechanism for communicating information between a processor 304, a display 306, a cursor control component 308, an input device 310, a main memory 312, a read only memory (ROM) 314, a storage unit 316, and/or a network interface 318. In embodiments, bus 302 is coupled to processor 304, display 306, cursor control component 308, input device 310, main memory 312, read only memory (ROM) 214, storage unit 316, and/or network interface 318. In embodiments, the network interface 318 is coupled to a network 320. Computing system 300 illustrated in FIG. 8 may be used in a remote computing environment in which a user (e.g., a technician) may inspect data monitored by the planetary transmission controller 203 via display 306, input device 310, and cursor control component 308. In embodiments, computing system 300 may include fewer components. For example, in embodiments, computing system 300 may not include display 306, cursor control component 308, and input device 310. Other variations of computing system 300 are contemplated herein. Such an example be one in which planetary transmission controller 203 monitors and retains data for later download by a technician.

In embodiments, processor 304 includes one or more general purpose microprocessors. In embodiments, main memory 312 (e.g., random access memory (RAM), cache and/or other dynamic storage devices) is configured to store information and instructions to be executed by processor 304. In embodiments, main memory 312 is configured to store temporary variables or other intermediate information during execution of instructions to be executed by processor 304. In embodiments, main memory 312 can be non-transitory computer readable medium 146. The instructions, when stored in storage unit 316 accessible to processor 304, render computing system 300 into a special-purpose machine that is customized to perform the operations specified in the instructions. In embodiments, ROM 314 is configured to store static information and instructions for processor 304. In embodiments, storage unit 316 (e.g., a magnetic disk, optical disk, or flash drive) is configured to store information and instructions.

Thus, computing system 300 may include at least some form of computer readable media. The computer readable media may be any available media that may be accessed by processor 304 or other devices. For example, the computer readable media may include computer storage media and communication media. The computer storage media may include volatile and nonvolatile, removable and non-removable media implemented in any method or technology for storage of information such as computer readable instructions, data structures, program modules or other data. The computer storage media may not include communication media.

In embodiments, display 306 (e.g., a cathode ray tube (CRT), an LCD display, or a touch screen) is configured to display information to a user of computing system 300. In some examples, input device 310 (e.g., alphanumeric and other keys) is configured to communicate information and commands to processor 304. For example, cursor control 308 (e.g., a mouse, a trackball, or cursor direction keys) is configured to communicate additional information and commands (e.g., to control cursor movements on the display 306) to processor 304.

In the illustrated embodiment, various combinations of two of the available selective couplers are engaged for each of the illustrated forward speed ratios. Additional forward speed ratios and reverse speed ratios are possible based on other combinations of engaged selective couplers. Although in the illustrated embodiment, each forward speed ratio has two of the available selective couplers engaged, it is contemplated that less than two and more than two selective couplers may be engaged at the same time.

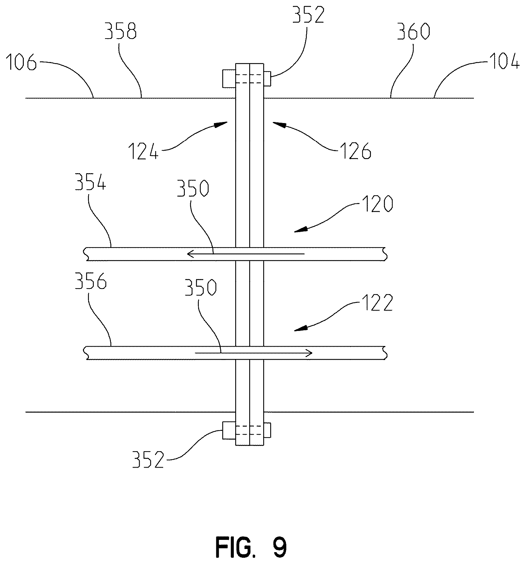

Turning now to FIG. 9, and with continued reference to FIG. 2, a view of port 120 and port 122 formed in the coupling of input coupler 106 and multi-speed transmission 104, and specifically formed in the coupling of interface section 124 of input coupler 106 and interface section 126 of multi-speed transmission 104. Hydraulic fluid 350 is illustrated flowing through port 120 from multi-speed transmission 104 to input coupler 106, and is illustrated as flowing through port 122 from input coupler 106 back to multi-speed transmission 104. Pump 125 (FIG. 2) is used to provide hydraulic pressure and motive force to hydraulic fluid 350 to pressurize and circulate hydraulic fluid 350 between multi-speed transmission 104 and input coupler 106. Input coupler 106 is defined by an outer housing 358 used to enclose components of input coupler 106, including to enclosed one or more fluid circuits that include hydraulic fluid 350. In embodiments, outer housing 358 is used to enclose a mechanical coupler such as input clutch 111 (FIGS. 1 and 2). Similarly, multi-speed transmission 104 is defined by an outer housing 360 used to enclose components of multi-speed transmission 104, including to enclose one or more fluid circuits that include hydraulic fluid 350 and selective couplers 132.

In embodiments, interface section 124 may be attached to interface section 126 using at least one fastener 352 permitting input coupler 106 to be separated from multi-speed transmission 104. Maintenance may be performed on one or more of multi-speed transmission 104 and input coupler 106 via removal of the at least one fastener 352. Further, reconfiguration of a coupling between multi-speed transmission 104 and prime mover 102 may be permitted by removing at least one fastener 352 and changing a coupling between multi-speed transmission 104 and prime mover 102, such as by replacing an existing coupling with input coupler 106 described herein. For example, it may be possible, as mentioned elsewhere herein, to remove a torque converter used to couple prime mover 102 to multi-speed transmission 104 and replace the torque converter with input coupler 106 disclosed herein thus retrofitting the coupling between multi-speed transmission 104 and prime mover 102. Such replacement of input coupler 106 for a torque converter may be facilitated by formation of interface section 124 in input coupler 106 to have an opening coincident with a corresponding opening in interface section 126 so as to form respective port 120 and port 122 that were also present when torque converter is coupled to multi-speed transmission 104. In these embodiments, working fluid path 354 and working fluid path 356 internal to input coupler 106 may be different than a flow path for hydraulic fluid 350 in the torque converter, but interface section 124 and interface section 126 otherwise remain compatible to form port 120 and port 122. Further, in embodiments, working fluid path 354 may include one or more working fluid path 356 used to route hydraulic fluid to other portions of input coupler 106. In embodiments, a first working fluid path 354 may deliver a flow of hydraulic fluid at a flow rate to input coupler 106, while a second working fluid path may deliver a variable pressure of hydraulic fluid to input coupler 106. Such additional working fluid paths may form additional ports beyond port 120 and/or port 122. Still further, in embodiments, a pressure regulator may be provided in input coupler 106 to regulate a pressure in working fluid path 354.

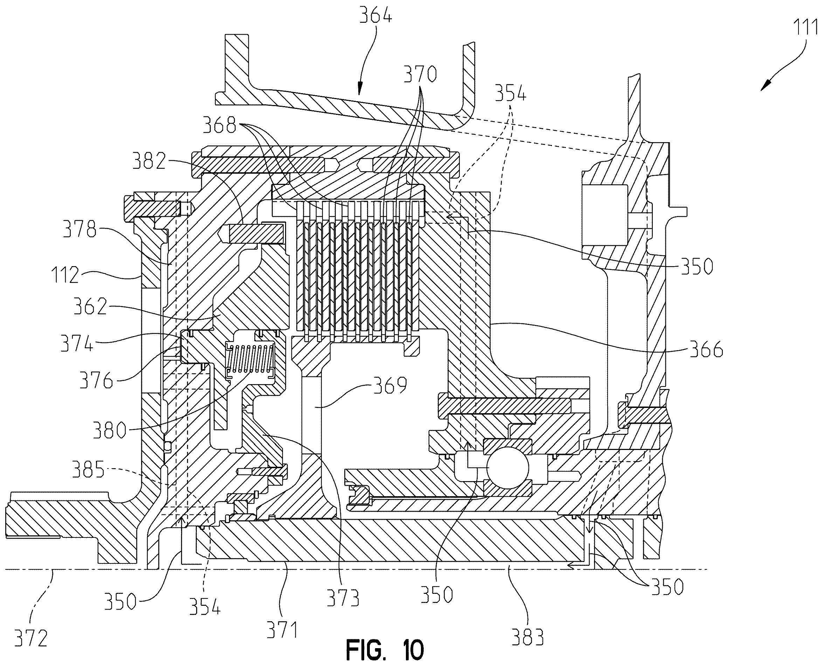

FIG. 10 depicts an embodiment of input clutch 111 as a clutch balance assembly useful to mechanically couple prime mover 102 to multi-speed transmission 104.. Input clutch 111 of the embodiment depicted in FIG. 10 is in the form of a multi-disk clutch and includes an apply piston 362 that moves relative to a clutch housing 378, where clutch housing 378 is operatively coupled to rotate with output shaft 108 of prime mover 102. Input clutch 111 also includes a disk pack 364useful to selectively couple clutch housing 378 with a shaft 371. Shaft 371 of input clutch 111 is operatively coupled to rotate with clutch output 114. In embodiments, shaft 371 can serve as clutch output 114. As explained herein, disk pack 364 in an engaged condition couples clutch housing 378 to shaft 371 via clutch hub 369 and in a disengaged condition permits clutch housing 378 to rotate relative to shaft 371.

Clutch input 112 is operatively coupled to an apply piston 362 which is capable of moving relative to outer housing 358 (FIG. 9) as well as being capable of moving relative to clutch housing 378 as input clutch 111 is changed between an engaged condition (e.g., output shaft 108 of prime mover 102 is operatively engaged with transmission input 110 of multi-speed transmission 104) and a disengaged condition (e.g., output shaft 108 of prime mover 102 is not engaged with transmission input 110 of multi-speed transmission 104).

Apply piston 362 is used to cause activation of disk pack 364 which includes a plurality of friction surfaces 368 and friction surfaces 370, where activation of disk pack 364 corresponds to engagement of friction surfaces 368 and friction surfaces 370 due to movement of apply piston 362 towards clutch hub 369. Friction surfaces 368 are coupled via a splined connection to clutch housing 378 and are therefore configured to rotate with clutch housing 378. Friction surfaces 370 are coupled via a splined connection to clutch hub 369 which is operatively coupled to a shaft 371, and are therefore configured to rotate with shaft 371. In embodiments, disk pack 364 may be replaced with a single friction surface so as to form a single friction surface 368 and a single friction surface 370. Friction surfaces 368 are complementary to friction surfaces 370. When input clutch 111 is in the disengaged condition, friction surfaces 368 and friction surfaces 370 are positioned relative to each other so as to prevent and/or limit contact so that mechanical power is not transferred between output shaft 108 of prime mover 102 and transmission input 110 of multi-speed transmission 104. When input clutch 111 is in the engaged condition, apply piston 362 urges contact between friction surfaces 368 and friction surfaces 370 so that mechanical power is transferred between output shaft 108 of prime mover 102 and transmission input 110 of multi-speed transmission 104. As mentioned, when transitioning between the engaged condition and the disengaged condition, apply piston 362 is moved relative to clutch hub 369. Varying levels of pressure may be applied to cause relative motion between apply piston 362 and clutch hub 369 so as to create varying levels of force applied, and thus varying levels of power transferred, between friction surfaces 368 and friction surfaces 370.

In embodiments, apply piston 362 may be configured to be slidingly moved along rotational axis 372. In embodiments, rotational axis 372 may coincide with a center of rotation of either or both of output shaft 108 of prime mover 102 and/or transmission input 110 of multi-speed transmission 104. A backside of apply piston 362 at a pressure member 374 receives pressurized working fluid, such as hydraulic fluid 350 routed through working fluid path 354. Hydraulic fluid 350 may be pressurized at varying levels of pressurization either through action of pump 125 and/or any pressure regulator valves in working fluid path 354. Pressure from hydraulic fluid 350 causes apply piston 362 to react via pressure member 374 and slide along rotational axis 372 toward clutch hub 369. Pressure member 374 is configured to rest within a cavity 376 of clutch housing 378. In embodiments, therefore, pressure member 374 may be referred to as a piston head. Pressure member 374 can slide along rotational axis 372 when pressure of hydraulic fluid 350 in cavity 376 changes pressure, causing sliding movement of apply piston 362 along rotational axis 372. In embodiments, apply piston 362 is annular in configuration about rotational axis 372. Pressure member 374 may therefore take on the form of a collar that fits within a complementary-shaped cavity 376. One or more seals may be provided in the interface between pressure member 374 and cavity 376 so as to discourage fluid leakage of hydraulic fluid 350 from cavity 376.

Input clutch 111 also includes an energy storage device 380 used to resist motion of apply piston 362 along rotational axis 372 when relatively high pressure of hydraulic fluid 350 in cavity 376 urges apply piston 362 to slide in a direction to increase volume of cavity 376. In embodiments, energy storage device 380 may take the form of one or more mechanical springs. While cavity 376 is located on a first side of apply piston 362, in embodiments, energy storage device 380 may be positioned opposite cavity 376 on a second side of apply piston 362 between apply piston 362 and balance piston 373 which forms another portion of clutch housing 378. In operation, cavity 376 defined between pressure member 374 of apply piston 362 and clutch housing 378 receives pressurized hydraulic fluid 350 used to urge apply piston 362 to slide along rotational axis 372, while energy storage device 380 located between apply piston 362 and balance piston 373 of clutch housing 378 acts against the pressurization of hydraulic fluid 350 in an opposite direction. When pressurization of hydraulic fluid 350 is relatively high and sufficient to compress energy storage device 380, apply piston 362 slides along rotational axis 372 and encourages contact between friction surfaces 368 and friction surfaces 370. Since apply piston 362 rotates with clutch input 112 as a result of interconnection of apply piston 362 and clutch housing 378 via react pin 382 which permits sliding motion of apply piston 362 relative to clutch housing 378, when sufficient contact force is created by pressurized hydraulic fluid 350 in cavity 376 to urge friction surfaces 368 into contact with friction surfaces 370, motion from clutch input 112is created in clutch hub 369. Since clutch hub 369 is coupled to shaft 371 and therefore connected via clutch output 114 to transmission input 110 of multi-speed transmission 104, and thence also connected to power consuming device 107, a load associated with power consuming device 107 can be mechanically rotated by extracting power from prime mover 102 via input coupler 106. It will be appreciated that input coupler 106 can be modulated, and specifically the pressure of hydraulic fluid 350 can be regulated, to vary a pressure applied to cause contact between friction surfaces 368 and friction surfaces 370. Such modulation of input coupler 106 may permit a slow increase in load upon prime mover 102 via a slow transfer of power to power consuming device 107. In embodiments, an engine speed of prime mover 102 (e.g., a speed of output shaft 108) can be maintained within a threshold by modulating power extraction from prime mover 102 via input coupler 106 while simultaneously changing a fuel flow rate to prime mover 102 to increase power output from output shaft 108. A balance of amount of power extraction from prime mover 102 via input coupler 106 with a change in fuel flow to prime mover 102 may be used to deliberately increase power extraction by changing the rotational speed of output 116 of multi-speed transmission 104 relative to input 110 of multi-speed transmission 104 (a shift event) while maintaining a speed of prime mover 102 (e.g., speed of output shaft 108).

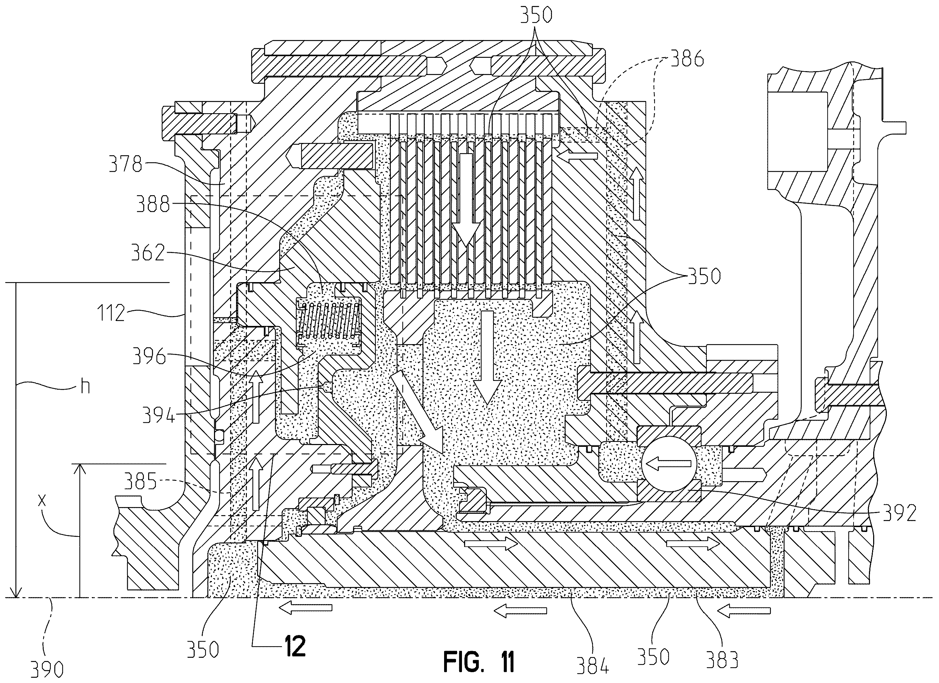

Turning now to FIG. 11 and with continuing reference to FIG. 10, flow paths of hydraulic fluid 350 and other features of input clutch 111 are illustrated. Input clutch 111 includes several fluid branches in working fluid path 354, including clutch apply fluid branch 384, clutch pack fluid branch 386, and balance branch 388. Clutch apply fluid branch 384 provides hydraulic fluid to cavity 376 (see FIG. 10) and is capable of providing varying pressure in hydraulic fluid 350 resident in cavity 376 to actuate apply piston 362. Clutch apply fluid branch 384 includes a first portion 383 that is routed axially along centerline 390 (which coincides to a center of rotation of clutch input 112 and/or clutch output 114 and may be coincident with rotational axis 372) before being turned radially outward in a second portion 385 proximate to an end of input coupler 106 near clutch input 112. First portion 383 is located radially inward of balance branch 388 and clutch pack fluid branch 386. In embodiments, first portion 383 extends a larger axial distance than an axial distance of disk pack 364. Clutch apply fluid branch 384 extends radially outward from centerline 390 to cavity 376. As will be appreciated, rotation of clutch input 112, and coincident rotation of clutch housing 378 and apply piston 362, creates a rotation induced pressure rise in hydraulic fluid 350 as a function of the rate of rotation of clutch input 112 and a distance x from centerline 390 (e.g., the acceleration at any point that is a distance x from centerline 390 is the square of rotational velocity of clutch input 112 multiplied by the distance x), as well as a fluid height h measured from a radially outer floor of the fluid column to a radially inner surface of the fluid column, or the centerline as in the case of clutch apply fluid branch 384. Thus, pressure in cavity 376 is a combination of pressure provided from, for example, pump 125 (FIG. 2), but also rotationally induced pressure that depends upon rotation rate of clutch input 112 and distance x. Such a combination of pressure may be referred to as a total pressure of hydraulic fluid 350 in cavity 376 (e.g., total pressure of hydraulic fluid 350 in cavity 376 is equal to rotational hydraulic pressure caused by rotation of apply piston 362 plus pressure provided from, for example, pump 125).

Clutch pack fluid branch 386 is routed in a radially outward direction from an inner region of input coupler 106 to an outer region of input coupler 106 before being turned radially inward to flow through disk pack 364. Clutch pack fluid branch 386 includes an upstream portion that flows through bearing 392 before being routed to disk pack 364 via working fluid path 354 formed in a portion 366 of clutch housing 378. Hydraulic fluid passing through disk pack 364 can be used to absorb heat caused by engagement of friction surfaces 368 and friction surfaces 370. One or more of friction surfaces 368 and friction surfaces 370 may include a groove that permits hydraulic fluid 350 to pass and thus cool an interior portion of disk pack 364. Clutch pack fluid branch 386 is routed to return hydraulic fluid 350 toward clutch output 114 and into multi-speed transmission 104. The return route of clutch pack fluid branch 386 to multi-speed transmission 104 may be located radially inward of bearing 392. Clutch housing 378 includes a balance cavity bleed 394 formed in balance piston 373 useful to deliver hydraulic fluid to balance branch 388.

Balance branch 388 is configured to retain an amount of hydraulic fluid 350 and, by virtue of rotation of clutch input 112, provide a rotation induced pressure in a balance cavity 396 to aid in offsetting the rotation induced pressure rise in hydraulic fluid 350 at cavity 376 owing to the length of clutch apply fluid branch 384 from centerline 390.

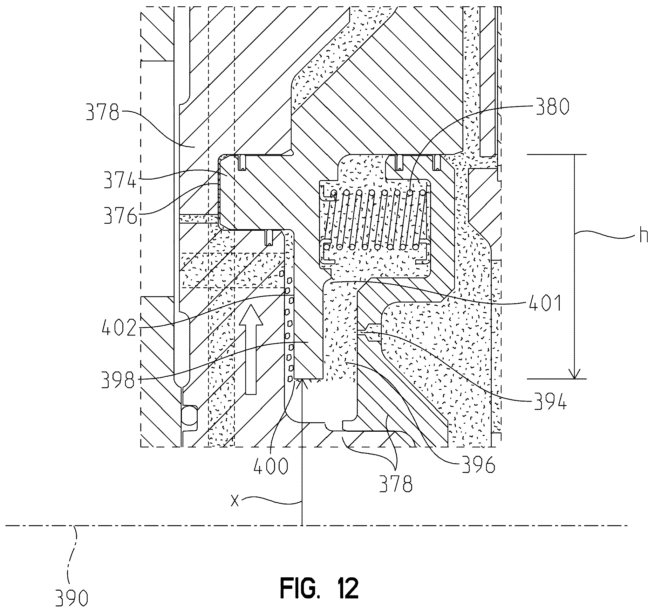

FIG. 12 provides a view of balance branch 388, and specifically balance cavity 396. Balance cavity 396 is defined between balance piston 373 and a balance flange 398 of apply piston 362. Balance flange 398 extends radially inward from pressure member 374, one or both of which may be coupled with energy storage device 380. Balance cavity 396 extends from a first side 401 of balance flange 398, around end 400, and to a second side 402 opposite first side 401 of balance flange 398. Given the relative placement of first side 401 and second side 402, each of first side 401 and second side 402 may be referred to as first axial side and second axial side, respectively. When apply piston 362 is caused to slide toward disk pack 364, an axial width of balance cavity 396 on first side 401 of balance flange 398 decreases and an axial width of balance cavity 396 on second side 402 increases; likewise, when apply piston 362 is caused to slide away from disk pack 364, the axial width of balance cavity 396 on first side 401 of balance flange 398 increases and the axial width of balance cavity 396 on second side 402 decreases. Pressure applied to disk pack 364 can be varied from a first pressure to a second pressure by moving, even slightly, apply piston 362 from a first position to a second position. Disk pack 364 may experience no pressure right until apply piston 362 moves far enough to contact it. Once contacting, the amount of movement is very small. The force on disk pack 364 then increases as apply pressure increases.

When hydraulic fluid 350 enters balance cavity 396 via balance cavity bleed 394 it is forced radially outward owing to rotational motion of clutch input 112 and collects on the side of balance flange 398 fed by balance cavity bleed 394 (e.g., first side 401). Energy storage member 380 may be submerged, completely or at least partially, in hydraulic fluid 350 on first side 401. When sufficient hydraulic fluid 350 builds up in first side 401 it may flow over end 400 and into second side 402 of balance flange 398. In this regard, balance flange 398 acts as a dam that defines a reservoir of hydraulic fluid 350 on first side 401 before spilling over end 400. As depicted, balance cavity bleed 394 is located radially outward from end 400. Hydraulic fluid 350 will rise to the level of the end 400 a distance h from a radially outer end of balance cavity 396. Once hydraulic fluid 350 spills over end 400, it may collect on second side 402 and/or pass through balance cavity 396 to a sump or other component. In embodiments, hydraulic fluid 350 flows out from second side 402 to a component that is vented to atmospheric conditions. For example, hydraulic fluid 350 may flow to a sump that is configured with a breather suitable to equalize pressure internal to input coupler 106 to that of atmospheric conditions. In embodiments, hydraulic fluid 350 may not collect on second side 402 once it has spilled over end 400, instead flowing direct to the sump or other suitable component. However, in other embodiments, hydraulic fluid 350 may collect on second side 402 once it has spilled over end 400. In embodiments, such collection of fluid on second side 402 may be relatively minor and which is not enough quantity to negate the intended effect described herein. Regardless, the rotation induced pressure exerted upon balance flange 398 by hydraulic fluid 350 on first side 401 imposes a force upon balance flange 398, and consequently a force upon apply piston 362, that opposes a total force imparted upon pressure member 374 of apply piston 362 by virtue of pressure in clutch apply fluid branch 384 (e.g., a total pressure in clutch apply fluid branch 384 at cavity 376 caused by a pressure in first portion 383 that is communicated to cavity 376 as well as rotation induced pressure in clutch apply fluid branch 384). Since clutch apply fluid branch 384 includes a column of fluid beginning at centerline 390, rotation induced pressure at pressure member 374 may be greater than rotation induced pressure caused by hydraulic fluid 350 in balance cavity 396 on first side 401 (e.g., the distance h in clutch apply fluid branch 384 to centerline 390 is greater than the distance h in balance cavity 396 between radially outer end of balance cavity 396 and end 400). Distance x to which end 400 extends may vary from embodiment to embodiment, as well as distance h from radially outer end of balance cavity 396 to end 400. Furthermore, balance cavity 396 extends radially outward to approximately a radially outward extent of cavity 376. Since end 400 extends radially inward further than a radially inner end of cavity 376, the surface area of balance flange 398 exposed to hydraulic fluid 350 in balance cavity 396 on first side 401 is greater than the surface area of pressure member 374 exposed to hydraulic fluid 350 in cavity 376. However, column height h of hydraulic fluid 350 in clutch apply fluid branch 384 results in larger acceleration imposed upon hydraulic fluid 350 in proximity to cavity 376 when compared to acceleration imposed upon hydraulic fluid 350 in balance cavity 396 on first side 401. Even in light of the differences in surface area exposed and acceleration experienced in each respective column of hydraulic fluid 350, rotation induced pressure on first side 401 is sized to aid in removing some or all of rotation induced pressure at cavity 376. Thus, a balance of pressures (e.g., a balance of rotation induced pressure) can be imposed upon apply piston 362 owing to balance cavity 396 aiding to offset rotation induced pressure rise in clutch apply fluid branch 384. Such a pressure balance may be a complete balance in that all rotation induced pressure rise in clutch apply fluid branch 384 is offset by rotation induced pressure rise in balance cavity 396, or may be a partial balance in that some of the rotation induced pressure rise in clutch apply fluid branch 384 is offset by rotation induced pressure rise in balance cavity 396. The pressure balance allows the pressure on apply piston 362 to more equate to the desired apply pressure from pump 125 independent of the rotational speed of apply piston 362 resulting in improved control over the resultant apply pressure.

FIG. 13 depicts a time history of an embodiment of a shift event of multi-speed transmission 104 while under power from prime mover 102 between transmission configurations (see, for example, FIG. 3). The time history depicted in FIG. 13 is shown relative to a constant speed engine, but other engine types (diesel engine, gasoline engine) may exhibit similar responses depending upon how power transfer system 109 is operated. Such a shift event may occur as a result of transmission control circuit 144 receiving from transmission shift selector 168 an operator interface requested shift change 180 (see FIG. 2 and FIG. 5). When transmission control circuit 144 determines to permit the shift change (see, e.g., block 184 in FIG. 5), the shift event may commence at start of shift 403. FIG. 13 depicts an engine speed 404, clutch slip speed 406 (e.g., the differential speed between portions of selective coupler as the selective coupler is engaged), engine torque 408, clutch pressure 410, and speed 412 of transmission output 116. Engine speed 404 may be provided by prime mover 102, or may be measured by speed sensor 150 which can be used as a proxy for engine speed. At start of shift 403, input coupler 106, and specifically pressure applied to apply piston 362 via hydraulic fluid 350 in clutch apply fluid branch 384, is controlled by transmission control circuit 144 in conjunction with controlling one or more selective couplers 132 (FIG. 4B) to modulate an amount of power being extracted from prime mover 102. Transmission control circuit 144 modulates an amount of power being extracted from prime mover 102 by varying pressure applied to disk pack 364 (either increasing or decreasing pressure during the shift event) while selective couplers 132 of multi-speed transmission 104 are changed between transmission configurations. Transmission control circuit 144 may modulate power extracted from prime mover 102 via input coupler 106 based upon a feedback of speed of output shaft 108 using one or more control schemes to reduce pressure applied to disk pack 364 if speed of output shaft 108 satisfies a first condition. For example, transmission control circuit 144 may modulate power extracted from prime mover 102 via input coupler 106 based upon a feedback of speed of output shaft 108 using one or more control schemes to reduce pressure applied to disk pack 364 if speed of output shaft 108 is lower than a lower threshold 414 and/or increase pressure applied to disk pack 364 if speed of output shaft 108 is higher than an upper threshold 416. In these examples, the first condition may be one of speed of output shaft 108 is lower than a lower threshold 414 or speed of output shaft 108 is higher than an upper threshold 416. In embodiments, a first condition and a second condition may both be monitored. For example, in such embodiments the first condition may be one of speed of output shaft 108 is lower than a lower threshold 414 or speed of output shaft 108 is higher than an upper threshold 416, and a second condition may be the other of speed of output shaft 108 is lower than a lower threshold 414 or speed of output shaft 108 is higher than an upper threshold 416. The range of speeds between the lower threshold 414 and upper threshold 416 may be referred to as an operating performance speed range. Although fuel flow to prime mover 102 may additionally be modulated by transmission control circuit 144 and/or prime mover control circuit 162 during a shift event to remedy an excursion beyond lower threshold 414 or upper threshold 416, in embodiments, fuel flow regulation of prime mover 102 by transmission control circuit 144 during a shift event may not be needed, instead relying solely upon modulating input coupler 106 by transmission control circuit 144 to avoid excursion of speed of output shaft 108 beyond lower threshold 414 or upper threshold 416, while fuel flow to constant speed engine is handled by prime mover control circuit 162. Prime mover control circuit 162, owing to natural dynamics of the constant speed engine, may have a bandwidth that is much lower than a bandwidth of transmission control circuit 144 in its modulation of input coupler 106. Thus, the time period over which constant speed engine adjusts its operation to account for a change in power extraction to move from a first power extraction corresponding at a first gear ratio to a steady state condition associated with a second power extraction corresponding to a second gear ratio is longer than the time period over which transmission control circuit 144 uses to change a pressure applied to disk pack 364 via apply piston 362 from a first pressure to a second pressure.

Returning to FIG. 13, at start of shift 403, engine speed 404 decreases as prime mover 102 experiences increased power extraction. Clutch slip speed 406 begins to decrease as shift event occurs and the selective coupler is moved to an engaged condition. Clutch pressure 410 will begin to increase as speed of transmission input 110 rises to the speed of clutch input 112. Note that although clutch pressure is shown as roughly asymptotic in nature, the curve also includes several inflection points 417 during the asymptotic rise indicating active modulation of pressure of disk pack 364 as transmission control circuit 144 regulates input coupler 106 to ensure power extraction from prime mover 102 remains at a sufficient level to avoid violating either of upper threshold 416 and/or lower threshold 414. Clutch pressure 410 eventually reaches a maximum at the end of shift 418. Speed of output shaft 108 also rises to its final speed at end of shift 418. Note that engine speed 404 remains low during the shift event as fuel flow is increased, and returns to a steady state value at or near the end of shift 418. The entire shift event depicted in FIG. 13 occurs over the span of approximately five (5) seconds. In embodiments, the entire shift event may vary from five seconds, and may be longer or shorter depending on the type of engine. The length of time between start of shift 403 and end of shift 418 includes a time required to change a gear ratio of multi-speed transmission 104 and to fully couple prime mover 102 to multi-speed transmission 104 through modulation of input coupler 106 while not causing engine speed 404 to violate lower threshold 414 and/or upper threshold 416. Such a length of time of constant speed engines is typically longer than other internal combustion engines. Typically, changing a gear ratio of multi-speed transmission 104 may occur faster than modulating power through input coupler 106 via transmission control circuit 144 so as not to cause engine speed 404 to violate lower threshold 414 and/or upper threshold 416. In embodiments of prime mover 102 in the form of a diesel engine, changing gear ratio of multi-speed transmission may violate lower threshold 414 and/or upper threshold 416. When speed of engine approaches a governed speed (e.g., engine speed is within a threshold of a target speed), configuration of multi-speed transmission 104 may be changed via transmission control circuit 144 to move from a first gear ratio to a second gear ratio and thereby change engine speed. The span of time between the start of shift 403 and end of shift 418, or at least a portion of the time between the start of shift 403 and end of shift 418, is marked by modulating of pressure of disk pack 364 as seen in clutch pressure 410. Such an event of modulating pressure of disk pack 364 may be referred to as 'feathering,' several control strategies of which are discussed briefly below.

Transmission control circuit 144 can include any variety of control schemes useful to monitor engine speed 404 and regulate operation of input coupler 106 to avoid extracting too much or too little torque from prime mover 102 via multi-speed transmission 104 which may result in violating one or both of upper threshold 416 and lower threshold 414. In embodiments, other data signals may be monitored in addition, or in lieu of, engine speed 404. Transmission Control Circuit 144 may be configured to monitor any useful feedback signal (e.g., engine speed 404, etc.) as discussed above and apply one or more feedback architectures of proportional (P), proportional-integral (PI), or proportional-integral-derivative (PID) feedback design. Modern control methodologies and/or robust control methodologies may also be used to monitor any useful feedback signal (e.g., engine speed 404, etc.) and regulate operation of input coupler 106 to avoid extracting too much or too little torque from prime mover 102 via multi-speed transmission 104 which may result in violating one or both of upper threshold 416 and lower threshold 414. Still further, data driven models may be used to monitor any useful feedback signal (e.g., engine speed 404, etc.) and regulate operation of input coupler 106 to avoid extracting too much or too little torque from prime mover 102 via multi-speed transmission 104 which may result in violating one or both of upper threshold 416 and lower threshold 414. For example, any suitable machine learning or artificial intelligence is contemplated that may use one or more feedback signals to formulate a control signal useful to regulate input coupler 106 as described herein. Some strategies may include incrementally increasing pressure from apply piston 362 to disk pack 364 to incrementally increase power extraction from prime mover 102 by input coupler 106. A command to increase pressure of hydraulic fluid 350 in working fluid path 354 may be initialized at a first value, and discretized increments may be added to the first value over a period of time while monitoring engine speed 404. If engine speed 404 approaches within a set range of lower threshold 414 and/or upper threshold 416, the command may be altered to return to a previous value of pressure that did not result in a condition of engine speed 404 approaching within a range of lower threshold 414 and/or upper threshold 416.

While this invention has been described as having exemplary designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

For the avoidance of doubt, the disclosure extends to the subject-matter of the following paragraphs, or "Paras":
Para 1. A power system for converting a prime mover input to a multi-speed transmission output, the prime mover configured to produce an engine output power within an operating performance speed range of the prime mover in response to a variable power extraction, the power system comprising:
   a multi-speed transmission adapted to be operatively coupled to the prime mover and configured to receive the engine output power from the prime mover and convert the engine output power to a transmission output torque and a transmission output speed, the multi-speed transmission including a plurality of speed ratios that relate an input speed to the transmission output speed of the multi-speed transmission; and
   a mechanical input clutch adapted to be in power flow communication between the prime mover and the multi-speed transmission, the mechanical input clutch during operation providing the variable power extraction from the prime mover to the multi-speed transmission, the mechanical input clutch operatively configured to modulate the variable power extraction from the prime mover to the multi-speed transmission so that an operating speed of the prime mover satisfies a first condition.
Para 2. The power system of Para 1, wherein the mechanical input clutch includes a working fluid path structured to deliver a hydraulic fluid to an apply piston, the working fluid path configured to rotate about an axis to produce a rotation induced pressure in the hydraulic fluid.
Para 3. The power system of Para 2, wherein a total pressure of the hydraulic fluid is modulated based on a shift event of the multi-speed transmission.
Para 4. The power system of Para 1, further comprising a transmission control circuit configured to operate the mechanical input clutch based on a speed of the prime mover so as to modulate the variable power extraction from the prime mover.
Para 5. The power system of Para 4, wherein the transmission control circuit is configured to feather the mechanical input clutch during a shift event by varying a pressure applied to a disk pack of the mechanical input clutch.
Para 6. The power system of Para 5, wherein the transmission control circuit is further configured to operate the mechanical input clutch based on a change in transmission configuration of the multi-speed transmission.
Para 7. A clutch assembly for modulating a power extraction from a constant speed engine during a coupling event in which the constant speed engine is coupled to and in power communication with a multi-speed transmission, the constant speed engine configured to produce an operating speed within an operating performance speed range by varying fuel flow in response to the power extraction, the multi-speed transmission having a plurality of planetary gear sets configured to produce a plurality of speed ratios when in power communication with the constant speed engine, the clutch assembly comprising:
   an outer housing;
   a clutch input configured to be in rotationally driven communication with a prime mover, the clutch input supported by the outer housing;
   a clutch output configured to be in rotationally driving communication with a multi-speed transmission, the clutch output supported by the outer housing;
   a disk pack configured to selectively couple the clutch input to the clutch output, the disk pack including at least one first friction surface capable of being selectively engaged with at least one second friction surface, the disk pack having an engaged condition to couple the clutch input to the clutch output characterized in that the at least one first friction surface is in contact with the at least one second friction surface and a disengaged condition to uncouple the clutch input to the clutch output in which the at least one first friction surface is not in contact with the at least one second friction surface;
   an apply piston configured to urge the at least one first friction surface into contact with the at least one second friction surface in the engaged condition when a hydraulic apply pressure is generated in an input hydraulic line, wherein a total pressure at a piston head of the apply piston is a sum of the hydraulic apply pressure and a rotational hydraulic pressure as a result of rotational motion of the apply piston about a rotational axis;
   a balance cavity having a balance cavity bleed configured to feed a hydraulic fluid to the balance cavity, the balance cavity structured to generate a balance cavity hydraulic pressure as a result of rotational motion of the balance cavity about the rotational axis, the balance cavity hydraulic pressure offsetting the rotational hydraulic pressure of the apply piston; and
   a working fluid path configured to flow a hydraulic fluid radially outward from the rotational axis through an interior of the outer housing, the working fluid path configured to flow radially inward through the disk pack and to the balance cavity bleed.
Para 8. The clutch assembly of Para 7, wherein the balance cavity is defined by a balance flange forming a dam configured to retain a volume of hydraulic fluid in the balance cavity.
Para 9. The clutch assembly of Para 8, wherein the balance cavity extends around an end of the dam, the volume of hydraulic fluid occupying the balance cavity up to the end of the dam on a first side of the balance flange during operation of the clutch assembly, and a flow of hydraulic fluid over the end of the dam to a second side of the balance flange opposite the first side during operation of the clutch assembly.
Para 10. The clutch assembly of Para 8, further comprising an energy storage device positioned on the first side of the balance flange and configured to produce an opposing force to the apply piston when the apply piston apply urges the at least one first friction surface into contact with the at least one second friction surface in the engaged condition.
Para 11. The clutch assembly of Para 8, further comprising a clutch housing configured to rotate about the rotational axis, wherein the apply piston is configured to rotate about the rotational axis, and wherein the apply piston is configured to translate relative to the clutch housing.
Para 12. The clutch assembly of Para 11, wherein the apply piston includes a pressure member positioned in a cavity of the clutch housing, and wherein the balance flange extends radially inward from the pressure member.
Para 13. The clutch assembly of Para 7, wherein the disk pack includes a plurality of the first friction surfaces coupled to rotate with the clutch input and a plurality of the second friction surfaces coupled to rotate with the clutch output, wherein the apply piston is slidingly coupled to a clutch housing via a react pin and is urged to force the first plurality of friction surfaces into contact with the second plurality of friction surfaces when it translates relative to the clutch housing.
Para 14. A power transfer system useful to transfer power between a prime mover and a power consuming device, the power transfer system comprising:
   a multi-speed transmission having a plurality of selective couplers operable to selectively change from an engaged condition to a disengaged condition, the multi-speed transmission including a transmission input configured to receive mechanical power;
   a pump configured to provide pressure and motive force to a hydraulic fluid consumed in the multi-speed transmission;
   an input coupler having a mechanical input clutch in power communication with the multi-speed transmission and in fluid communication with the pump, the input coupler having a mechanical clutch, the input coupler including a clutch input configured to receive mechanical power and a clutch output configured to be coupled to the transmission input of the multi-speed transmission and transfer power from the clutch input to the transmission input of the multi-speed transmission;
   a first working fluid path is defined to convey the hydraulic fluid from the multi-speed transmission to the input coupler, the first working fluid path routed through a first port defined between the multi-speed transmission and the input coupler; and
   a second working fluid path is defined to convey the hydraulic fluid from the input coupler to the multi-speed transmission, the second working fluid path routed through a second port defined between the multi-speed transmission and the input coupler.
Para 15. The power system of Para 14, wherein the input coupler defines a first interface section, wherein the multi-speed transmission defines a second interface section, and wherein the first interface section and second interface section together define the first port and the second port.
Para 16. The power system of Para 15, wherein the first interface section is used to enclose an open interior of the input coupler, and wherein the second interface section is used to enclose an open interior of the multi-speed transmission.
Para 17. The power system of Para 14, wherein the first working fluid path extends into the input coupler and includes a clutch pack fluid branch configured to route the hydraulic fluid radially outward to a disk pack of the input coupler, the clutch pack fluid branch configured to flow the hydraulic fluid radially inward through the disk pack.
Para 18. The power system of Para 17, wherein the first working fluid path also includes a balance branch, the balance branch located downstream of the clutch pack fluid branch, a balance cavity bleed configured to provide working fluid from the clutch pack fluid branch to the balance branch.
Para 19. The power system of Para 18, wherein the first working fluid path also includes a clutch apply fluid branch configured to provide the hydraulic fluid to an apply piston of the mechanical input clutch, the clutch apply fluid branch including a first portion located radially inward of the balance branch, and a second portion extending radially outward from the first portion to the apply piston.
Para 20. A clutch balance assembly for an input clutch to provide an offset hydraulic pressure as a result of rotation of the clutch balance assembly, the clutch balance assembly comprising:
   a clutch input configured to receive rotational power from a prime mover;
   a clutch output configured to deliver rotational power to a multi-speed transmission;
   a disc pack configured to selectively couple the clutch input to the clutch output;
   an apply piston having a piston head on a first axial side of the apply piston, the apply piston configured to receive a hydraulic fluid in contact with the piston head, the piston head extending a radial distance offset from a rotational axis of the apply piston, a pressure at the piston head in part driven by rotational motion of the apply piston about the rotational axis, the rotational motion forming a rotation induced pressure, the rotation induced pressure a component of the pressure at the piston head;
   a balance flange connected to the apply piston and configured to move with the apply piston, the balance flange extending radially inward relative to the piston head and having a first axial side and a second axial side, the first axial side of the balance flange opposite the second axial side of the balance flange; and
   a balance cavity defined by the balance flange, the balance cavity extending on the first axial side of the balance flange and the second axial side of the balance flange.
Para 21. The clutch balance assembly of Para 20, wherein the balance flange having an end located radially inward from the piston head, the end permitting the hydraulic fluid to spill over from the first axial side to the second axial side during operation of the clutch balance assembly.
Para 22. The clutch balance assembly of Para 20, wherein a surface area of the piston head is smaller than a surface area of the first axial side of the balance flange.
Para 23. The clutch balance assembly of Para 22, wherein when first axial side of the balance cavity includes the hydraulic fluid, a rotation induced pressure on first axial side of the balance flange balances the rotation induced pressure at the piston head.
Para 24. The clutch balance assembly of Para 22, further comprising a balance cavity bleed configured to provide the hydraulic fluid to the balance cavity located on the first axial side of the balance flange.
Para 25. The clutch balance assembly of Para 20, further comprising an energy storage member disposed in the balance cavity, the energy storage member configured to oppose axial motion of the apply piston when the hydraulic fluid in contact with the piston head is pressurized.
Para 26. The clutch balance assembly of Para 25, wherein the energy storage member is located radially outward from an end of the balance flange defined between the first axial side and the second axial side, the energy storage member is submerged in the hydraulic fluid on the first axial side of the balance flange.
Para 27. The clutch balance assembly of Para 20, further comprising a clutch housing slidingly coupled with the apply piston, the balance cavity defined between the clutch housing and the balance flange on the first axial side of the balance flange and the second axial side of the balance flange.
Para 28. The clutch balance assembly of Para 27, wherein an axial width of the balance cavity on the first axial side changes from a first width to a second width as the apply piston moves from a first position to a second position.
Para 29. A method of operating a power system, the power system having a constant speed engine coupled to a multi-speed transmission through an input clutch, the method comprising:
   fueling the constant speed engine at a first steady state fuel flow to maintain a speed of the constant speed engine within an operating performance speed range and provide a first power output, the first power output providing a power extraction from the constant speed engine to the multi-speed transmission;
   changing a gear ratio of the multi-speed transmission and thereby vary the power extraction from the constant speed engine to the multi-speed transmission;
   modulating the power extraction from the constant speed engine to the multi-speed transmission through a pressure applied between a first friction surface of the input clutch and a second friction surface of the input clutch; and
   during the modulating, altering fueling of the constant speed engine to maintain an operating speed of the constant speed engine in an operating performance speed range.
Para 30. The method of Para 29, further comprising sensing a speed of the constant speed engine to form a sensed speed, wherein the modulating is based on the sensed speed.
Para 31. The method of Para 29, wherein the modulating includes varying a pressure to a disk pack of a mechanical input clutch in power communication between the constant speed engine and the multi-speed transmission.
Para 32. The method of Para 31, wherein the modulating includes changing a pressure of a hydraulic fluid to cause an apply piston of the input clutch to move between a first position and a second position, the first position corresponding to a first pressure applied to the disk pack and the second position corresponding to a second pressure applied to the disk pack.
Para 33. The method of Para 32, wherein the changing the gear ratio occurs over a time period shorter than a time period over which the modulating the power extraction occurs.
Para 34. The method of Para 29, wherein fueling the constant speed engine is performed by an engine control circuit configured to control the constant speed engine, and wherein modulating the power extraction is performed by a transmission control circuit.

## Claims

1. A power system for converting a prime mover input to a multi-speed transmission output, the prime mover configured to produce an engine output power within an operating performance speed range of the prime mover in response to a variable power extraction, the power system comprising:
a multi-speed transmission adapted to be operatively coupled to the prime mover and configured to receive the engine output power from the prime mover and convert the engine output power to a transmission output torque and a transmission output speed, the multi-speed transmission including a plurality of speed ratios that relate an input speed to the transmission output speed of the multi-speed transmission; and
a mechanical input clutch adapted to be in power flow communication between the prime mover and the multi-speed transmission, the mechanical input clutch during operation providing the variable power extraction from the prime mover to the multi-speed transmission, the mechanical input clutch operatively configured to modulate the variable power extraction from the prime mover to the multi-speed transmission so that an operating speed of the prime mover satisfies a first condition.

2. The power system of claim 1, wherein the mechanical input clutch includes a working fluid path structured to deliver a hydraulic fluid to an apply piston, the working fluid path configured to rotate about an axis to produce a rotation induced pressure in the hydraulic fluid.

3. The power system of claim 2, wherein a total pressure of the hydraulic fluid is modulated based on a shift event of the multi-speed transmission.

4. The power system of claim 1, further comprising a transmission control circuit configured to operate the mechanical input clutch based on a speed of the prime mover so as to modulate the variable power extraction from the prime mover.

5. The power system of claim 4, wherein the transmission control circuit is configured to feather the mechanical input clutch during a shift event by varying a pressure applied to a disk pack of the mechanical input clutch.

6. The power system of claim 4, wherein the transmission control circuit is further configured to operate the mechanical input clutch based on a change in transmission configuration of the multi-speed transmission.

7. The power system of claim 1, wherein the mechanical input clutch is operatively configured to modulate the variable power extraction from the prime mover to the multi-speed transmission so that the operating speed of the prime mover satisfies a second condition.

8. The power system of claim 7, wherein the first condition is based on a first output shaft speed and the second condition is based on a second output shaft speed.

9. The power system of claim 8, wherein an operating performance speed range is defined by the first output shaft speed and the second output shaft speed.

10. A method of operating the power system of claim 9, wherein the prime mover is a constant speed engine coupled to the multi-speed transmission through the mechanical input clutch, the method comprising:
fueling the constant speed engine at a first steady state fuel flow to maintain a speed of the constant speed engine within the operating performance speed range and provide the engine output power, the engine output power providing a power extraction of the variable power extraction from the constant speed engine to the multi-speed transmission;
changing a gear ratio of the multi-speed transmission and thereby vary the power extraction from the constant speed engine to the multi-speed transmission;
modulating the power extraction from the constant speed engine to the multi-speed transmission through a pressure applied between a first friction surface of the mechanical input clutch and a second friction surface of the mechanical input clutch; and
during the modulating, altering fueling of the constant speed engine to maintain the operating speed of the constant speed engine in the operating performance speed range.

11. The method of claim 10, further comprising sensing a speed of the constant speed engine to form a sensed speed, wherein the modulating is based on the sensed speed.

12. The method of claim 10, wherein the modulating includes varying a pressure to a disk pack of the mechanical input clutch in power communication between the constant speed engine and the multi-speed transmission.

13. The method of claim 12, wherein the modulating includes changing a pressure of a hydraulic fluid to cause an apply piston of the mechanical input clutch to move between a first position and a second position, the first position corresponding to a first pressure applied to the disk pack and the second position corresponding to a second pressure applied to the disk pack.

14. The method of claim 13, wherein the changing the gear ratio occurs over a time period shorter than a time period over which the modulating the power extraction occurs.

15. The method of claim 10, wherein fueling the constant speed engine is performed by an engine control circuit configured to control the constant speed engine, and wherein modulating the power extraction is performed by a transmission control circuit.
